(19) **Europäisches Patentamt**

**European Patent Office**

**Office européen des brevets**

(11) **EP 1 157 899 B1**

(12) **EUROPÄISCHE PATENTSCHRIFT**

(45) Veröffentlichungstag und Bekanntmachung des Hinweises auf die Patenterteilung:
**19.04.2006 Patentblatt 2006/16**

(51) Int Cl.:
***B60R 21/01*** *(2006.01)*    ***B60R 21/13*** *(2006.01)*

(21) Anmeldenummer: **01111413.9**

(22) Anmeldetag: **10.05.2001**

(54) **Verfahren und Sicherheitssystem zur Erkennung eines Überschlages und zur Auslösung einer Sicherheitseinrichtung in einem Kraftfahrzeug**

Process and safety system for detecting a roll-over and for enabling a safety device in a motor vehicle

Procédé et système de sécurité pour la détection d'un tonneau et pour le déclenchement d'un system de sécurité dans un véhicule automobile

(84) Benannte Vertragsstaaten:
**DE ES FR GB IT SE**

(30) Priorität: **22.05.2000 DE 10025259**

(43) Veröffentlichungstag der Anmeldung:
**28.11.2001 Patentblatt 2001/48**

(73) Patentinhaber: **Conti Temic microelectronic GmbH**
**90411 Nürnberg (DE)**

(72) Erfinder:
• **Küblbeck, Hermann**
**86529 Schrobenhausen (DE)**
• **Rottenkolber, Ernst**
**85238 Petershausen (DE)**
• **Steiner, Peter, Dr.**
**86529 Schrobenhausen (DE)**
• **Steurer, Helmut**
**85302 Gerolsbach-Junkenhofen (DE)**
• **Weidel, Peter**
**85276 Pfaffenhofen (DE)**

(56) Entgegenhaltungen:
**EP-A- 0 261 152          EP-A- 1 028 037**
**DE-A- 19 719 780      DE-C- 19 632 363**

**Beschreibung**

Die Erfindung betrifft ein Verfahren zur Erzeugung eines das Sensorsignal eines in einem Sicherheitssystem eines Kraftfahrzeuges vorgesehenen Drehratensensors verarbeitenden Auslösealgorithmus, mit dem eine Auslöseentscheidung zur Auslösung von wenigstens einer Sicherheitseinrichtung des Sicherheitssystems in Abhängigkeit des Sensorsignals getroffen wird und das Sensorsignal ein Maß für die Drehgeschwindigkeit der bei einem drohenden Überschlag auftretenden Wankbewegung darstellt. Ferner betrifft diese Erfindung auch ein diesen Auslösealgorithmus verwendendes Sicherheitssystem für ein Kraftfahrzeug mit wenigstens einer Sicherheitseinrichtung. Dabei kommen als Sicherheitseinrichtungen im Zusammenhang mit Überrollvorgängen vornehmlich. Überschlagbügel, Gurtstraffer und Sideairbags in Frage.

Der Oberbegriff des Anspruchs 1 ist dem Fachmann algemein bekannt.

Aus der EP 0 430 813 B1 ist ein Sicherheitssystem für Kraftfahrzeuge mit einer elektronischen Anordnung zur Steuerung wenigstens einer Sicherheitseinrichtung im Falle eines Überschlags des Kraftfahrzeugs bekannt. Das Sicherheitssystem enthält ein Gyrometer (Drehraten- oder Gyrosensor), das die Drehgeschwindigkeit der Wankbewegung mißt, und Beschleunigungsmesser, wobei die elektronische Anordnung die vom Gyrometer und von den Beschleunigungssensoren stammenden Signale zur Steuerung der Auslösung der Sicherheitseinrichtung verarbeitet. Hierbei erfolgt die Auswertung der Sensorsignale mittels Integration für eine bestimmte Zeitdauer. Um ein Überlaufen der Integration zu vermeiden wird zusätzlich das Verhältnis von Querbeschleunigung zu Vertikalbeschleunigung berechnet und bei Überschreiten eines vorgegebenen Schwellwertes die Integration freigegeben.

Der Nachteil des in diesem Sicherheitssystems verwendeten Auslösealgorithmus besteht vor allem darin, daß zur Verhinderung des Überlaufes der Integration neben des Signalen des Drehratensensors weitere Signale, nämlich Signale von Beschleunigungssensoren erforderlich sind, die lediglich dem Zweck dienen, die Drehratensensorsignale auswerten zu können, jedoch hohe Herstellkosten des Gesamtsystems zur Folge haben.

Es ist deshalb Aufgabe der Erfindung, ein verfahren zur Erzeugung eines das sensorsignal eines in einem Sicherheitssystem eines Kraftfahrzeuges eingesetzten Drehratensensors verarbeitenden Auslösealgorithmus anzugeben, mit dem eine Auslöseentscheidung zur Auslösung von wenigstens einer Sicherheitseinrichtung des Sicherheitssystems in Abhängigkeit des Drehratensensorsignals getroffen wird, wobei dieses Sensorsignal ein Maß für die Drehgeschwindigkeit der bei einem drohenden Überschlag auftretenden Wankbewegung darstellt und der die oben genannten Nachteile nicht aufweist, also zur Auswertung der Drehratensensorsignale keine Signale weiterer teuren Beschleunigungssensoren erfordert.

Diese Aufgabe wird mit den Verfahrensschritten gemäß den Merkmalen des Anspruchs 1 gelöst.

Dadurch, daß mit dem erfindungsgemäßen Verfahren ein Auslösealgorithmus erzeugt wird, der mit Tiefpaßfilterfunktionen die Bewertung der von dem Drehratensensor erzeugten Sensorsignale vornimmt, werden auf überraschend und einfache weise die bei Verwendung von Integratoren auftretenden Nachteile beseitigt, da nunmehr die zur Vermeidung eines Überlaufes erforderlichen Maßnahmen, insbesondere die im Stand der Technik genannten weiteren Sensoren entfallen.

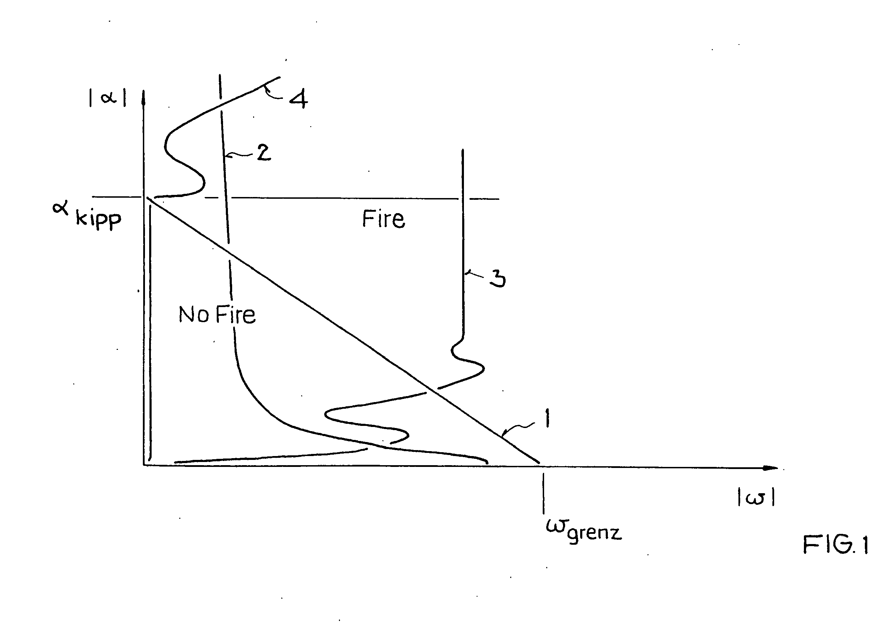

Das erfindungsgemäße verfahren macht dabei erstmals von einer theoretischen Überschlag-Kennlinie als Kennlinienmodell zur Erzeugung des erfindungsgemäßen Auslösealgorithmus Gebrauch, die in Anspruch 1 als Gleichung (1) bezeichnet wird und dessen $\omega$-$\alpha$- Graph in Figur 1 dargestellt ist, wobei $|\omega|$ den Betrag der Drehgeschwindigkeit der bei einem drohenden Überschlag des Fahrzeuges auftretenden Wankbewegung bzgl. dessen x-Achse (Längsachse) und $|\alpha|$ den Betrag des Neigungswinkels in y-Richtung (Querachse) des Fahrzeuges darstellt. Der $\omega$-$\alpha$-Graph teilt den ersten Quadranten in zwei Gebiete ein, die einerseits Fahrzeugzustände mit $\omega$-$\alpha$-Kombinationen betreffen, die zur Auslösung einer Sicherheitseinrichtung führen sollen, also Fire-Szenarien und andererseits No-Fire-Szenarien darstellen, deren $\omega$-$\alpha$-Kombinationen nicht zur Auslösung der Sicherheitseinrichtung führen sollen. Die $\omega_{grenz}$,0-Kombination bzw. 0,$\alpha_{kipp}$-Kombination stellt einen Grenzzustand eines Fahrzeuges mit einer Drehgeschwindigkeit $\omega_{grenz}$ in x-Richtung und einem Neigungswinkel von 0° bzw. mit einer Drehgeschwindigkeit 0 und einem Neigungswinkel (statischer Kippwinkel) $\alpha_{kipp}$ dar, der zu einem Überschlag führt. Diese Parameter sind fahrzeugspezifisch und müssen daher für jeden Fahrzeugtyp gesondert bestimmt werden. Ferner zeigt Figur 1 neben der Überschlag-Kennlinie 1 drei Überschlagszenarien mit den Kurven 2, 3 und 4. Die Kurve 2 zeigt den Verlauf eines Überschlages, der mit einer hohen Anfangsgeschwindigkeit beginnt, während bei Kurve 3 das Fahrzeug auf eine Schraubrampe auffährt und sich anschließend überschlägt. Mit der Kurve 4 wird ein quasistatischer Überschlag dargestellt, bei dem das Fahrzeug mit einer Winkelgeschwindigkeit von nahezu Null den statischen Kippwinkel erreicht und sich dann überschlägt.

Die Tiefpassfilterfunktionen können als digitale Filter, vorzugsweise 1. Ordnung mittels eines Computers erzeugt werden, wobei der Filteralgorithmus aus linearen Differenzengleichungen mit konstanten Koeffizienten besteht, wobei sowohl rekusive als auch nichtrekursive Differenzengleichungen verwendbar sind.

Ein Filteralgorithmus für die erste und zweite Tiefpassfilterfunktion $Y_{1,n}$, n=1,2,.., und $Y_{2,n}$, n=1,2,.. eines rekursiven Filters erster Ordnung nimmt näherungsweise folgende Form an:

$$Y_{1,n} = d_1 Y_{1,n-1} + c_1 X_n, \; n = 1, 2, \ldots \; \text{bzw.}$$

$$Y_{2,n} = d_2 Y_{2,n-1} + c_2 X_n, \; n = 1, 2, \ldots$$

wobei $X_n$ die digitalisierte Eingangsfolge der Drehgeschwindigkeit $\omega$ und $Y_{1,n}$ bzw. $Y_{2,n}$ die entsprechende binäre Ausgangsfolge darstellen, wobei die Werte dieser Ausgangsfolgen $Y_{1,n}$ und $Y_{2,n}$ für über der Grenzfrequenz liegende $\omega$-Werte aufgrund der integrierenden Eigenschaft in diesem Frequenzbereich annähernd proportional zu den Werten des Neigungswinkels $\alpha$ sind. Die Koeffizienten des Filteralgorithmus werden entsprechend dem Verfahrensschritt b) durch Approximation mittels der Festlegung der Grenzfrequenzen und der Auslöseschwellen derart ermittelt, daß die Bedingung (2) erfüllt ist.

Die Grenzfrequenz wird jeweils entsprechend der anfänglichen Drehgeschwindigkeit bestimmt, so daß eine anfänglich hohe Drehgeschwindigkeit, die einer hohen anfänglichen Rotationsenergie entspricht, zu einer hohen Grenzfrequenz mit einer hieran angepaßten Auslöseschwelle, d. h. zu einer ebenfalls hohen Auslöseschwelle führt, während für eine niedrige anfängliche Drehgeschwindigkeit, die einer niedrigen anfänglichen Rotationsenergie entspricht, eine niedrige Grenzfrequenz mit einer hieran angepaßten Auslöseschwelle, d. h. eine ebenfalls niedrige Auslöseschwelle festgelegt wird. Die Werte der Grenzfrequenz sowie der zugehörigen Auslöseschwelle hängen von dem jeweiligen Fahrzeugtyp sowie von der darin eingebauten, im Crashfall auszulösenden Sicherheitseinrichtung (Überrollbügel, Gurtstraffer, Sideairbag) ab und müssen daher für jeden Anwendungsfall angepaßt werden um ein optimales und sicheres Auslöseverhalten sicherzustellen.

Zur Approximation der Überschlag-Kennlinie gemäß Gleichung (1) wird vorzugsweise eine Sprungfunktion $\omega$ (t) als Eingangsfolge für die Tiefpassfilterfunktionen von diesen verarbeitet und deren resultierender $\omega$-$\alpha$-Graph mit dem Graphen der Überschlag-Kennlinie verglichen und gegebenenfalls eine Anpassung der Grenzfrequenzen und der Schwellwerte vorgenommen.

Im weiteren wird der Auslösealgorithmus mit aus früheren Fahrzeugversuchen gewonnenen, also realen Sensorsignaturen und/oder mit im Rahmen einer passenden Simulationsumgebung simulierten Sensorsignaturen getestet. Anhand dieser Simulationsergebnisse wird die Auslösekennlinie im $\omega$-$\alpha$-Diagramm bewertet und gegebenenfalls eine Anpassung der Grenzfrequenzen und der zugehörigen Auslöseschwellen vorgenommen.

Mit einem solchen erfindungsgemäßen Verfahren zur Erzeugung eines Auslösealgorithmus kann das Auslöseverhalten individuell an jeden Fahrzeugtyp angepaßt werden, ohne zunächst kostspielige Fahrversuche durchführen zu müssen.

Bei einer weiteren vorteilhaften Weiterbildung dieses erfindungsgemäßen Verfahrens werden zusätzliche Signale weiterer Sensoren von dem Auslösealgorithmus, im folgenden erweiterter Auslösealgorithmus genannt, verarbeitet, wobei diese Sensoren fahrzeugzustandsspezifische, die Stabilität anzeigende Parameter, insbesondere Vertikalbeschleunigung, Lateralbeschleunigung und Neigungswinkel erfassen. Mit diesen zusätzlichen Daten lassen sich die Werte der Auslöseschwellen dynamisch an den jeweiligen Fahrzeugzustand anpassen. So kann zum Beispiel der Anfangswert des Neigungswinkels des Fahrzeuges oder dessen Stabilität aufgrund des Beschleunigungswertes in z-Richtung bei der Auslöseentscheidung berücksichtigt werden. Damit soll in Abhängigkeit der detektierten fahrzeugspezifischen Parameter eine noch bessere Differenzierung nach Fire-szenarien, d. h. Fahrzeugzustände, die zur Auslösung der Sicherheitseinrichtung führen soll, und No-fire-szenarien erzielt werden.

Der mit dem erfindungsgemäßen Verfahren erzeugte Auslösealgorithmus kann mit Vorteil in einem Sicherheitssystem für Kraftfahrzeuge eingesetzt werden. Dabei wird dieser Auslösealgorithmus in dem Steuergerät des Sicherheitssystems implementiert, das einen Drehratensensor zur Erfassung der Drehgeschwindigkeit der Wankbewegung des Fahrzeuges und wenigstens eine Sicherheitseinrichtung aufweist. Dabei kann der erfindungsgemäß erzeugte Auslösealgorithmus sowohl analog, also mit entsprechenden analogen Filtern, oder softwaremäßig mittels eines Prozessors im Steuergerät des Sicherheitssystems realisiert werden.

Die Grenzfrequenzen und die Auslöseschwellen werden so festgelegt, daß die Tiefpassfilterfunktion für die hohen Drehgeschwindigkeiten die höhere Grenzfrequenz und eine entsprechend hohe Auslöseschwelle aufweist, während die Tiefpassfilterfunktion für die niedrigeren Drehgeschwindigkeiten auch eine entsprechende niedrigere Grenzfrequenz und auch eine niedrigere Auslöseschwelle benötigt. Entsprechende Werte für die Grenzfrequenzen für langsame oder schnelle Fahrzeugüberschläge sind in den Ansprüchen 9 und 10 angegeben.

So weist gemäß einem besonders bevorzugten Ausführungsbeispiel eine erste Tiefpaßfilterfunktion zur Erkennung eines schnellen Überschlages mit hoher anfänglicher Rotationsenergie eine hohe Grenzfrequenz in der Größenordnung einiger Hz und einen entsprechend hohen Auslöseschwellwert auf, während die zweite Tiefpaßfilterfunktion zur Erkennung eines Überschlages mit niedrigerer Rotationsenergie eine darunterliegenden Grenzfrequenz von nur wenigen Hz mit einem hieran angepaßten Auslöseschwellwert auf. Damit wird insbesondere bei schnellen Überschlägen auch eine schnelle Auslösung der Sicherheitseinrichtung sichergestellt. Vorzugsweise kann dieses Ausführungsbeispiel mit einer dritten, langsame Überschläge detektierende Tiefpaßfilterfunktion ausgestattet werden, deren Grenzfrequenz größenordnungsmäßig einige 1/10-Hz mit einer daran angepaßten Auslöseschwellwert beträgt. Bei Verwendung von drei Tiefpaßfilterfunktionen kann eine optimale Differenzierung nach Überschlagszenarien und gleichzeitig auch nach sogenannten No-fire-szenarien, d. h. solche Fahrzeugzustände, die nicht zu einer Auslösung der Sicherheitseinrichtung führen sollen, erzielt werden.

Weiterhin können bei einem vorteilhaften Ausführungsbeispiel die von dem Drehratensensor erzeugten Signale zuerst einem Hochpaßfilter zugeführt werden, bevor sie von den Tiefpaßfilterfunktionen verarbeitet werden. In vorteilhafter Weise wird mit dieser Maßnahme die Nullpunktsungenauigkeit des Drehratensensors vermindert.

Bei einem weiteren bevorzugten Ausführungsbeispiel des Sicherheitssystems wird der erweiterte Auslösealgorithmus in dessen Steuergerät implementiert um zusätzlich zur Drehrate fahrzeugspezifische Parameter zu bewerten. Vorzugsweise wird unter Verwendung eines Beschleunigungssensors die Vertikalbeschleunigung eines Kraftfahrzeuges erfaßt und mit wenigstens einer Anpassungsschwelle verglichen, und bei einer Überschreitung bzw. Unterschreitung dieser Anpassungsschwelle die werte der Auslöseschwellen hochgesetzt bzw. heruntergesetzt werden. Damit wird das Signal eines solchen Beschleunigungssensors nicht zur Auswertung des Drehratensensorsignals benötigt - wie dies im Stand der Technik vorgesehen ist - sondern zur dynamischen Anpassung der Auslöseschwellen, da dieses Signal zusätzliche Informationen hinsichtlich der Stabilität des Fahrzeuges liefert und damit eine Art von Plausibilitätsprüfung hinsichtlich eines zum Beispiel hohen Anfangswertes einer Drehgeschwindigkeit durchgeführt wird. Das heißt, daß bei einem großen Wert des z-Beschleunigungssignals die Auslöseschwellen trotz hoher anfänglicher Drehgeschwindigkeit höher gelegt werden können, während ein niedriges Signal auf eine geringe Fahrstabilität des Fahrzeuges hinweist und daher eine niedrige Auslöseschwelle einzustellen ist. In vorteilhafter weise wird damit eine schnellere Auslösung bei langsamen Überschlägen erreicht und gleichzeitig bei extremen, im normalen Fahrbetrieb kaum vorkommenden Situationen, wie z. B. bei stark überhöhten Kurven, eine Auslösung verhindert.

Anstelle eines solchen Beschleunigungssensors kann auch ein Neigungssensor eingesetzt werden. Die Anpassung der Auslöseschwellen erfolgt dabei derart, daß bei einem großen Neigungswinkel eine niedrige Auslöseschwelle gesetzt wird, da dann die Fahrstabilität gering ist, dagegen bei einem niedrigen Neigungswinkel eine höhere Auslöseschwelle vorzusehen ist. Der Neigungssensor bietet darüber hinaus zusätzlich noch den Vorteil, auch das Vorzeichen des Neigungswinkels anzugeben. Damit können die Schwellen asymmetrisch angepaßt werden, d. h., wenn die Drehrate und der Neigungswinkel das gleiche Vorzeichen haben, wird ein niedriger Auslöseschwellwert, während bei verschiedenen Vorzeichen ein hoher Auslöseschwellwert gesetzt wird.

Als weitere fahrzeugspezifische Parameter können bei einem anderen bevorzugten Ausführungsbeispiel des erfindungsgemäßen Sicherheitssystems sowohl die vertikalbeschleunigung als auch die Lateralbeschleunigung erfaßt werden, wobei mittels des Wertes aus dem Quotienten aus Lateralbeschleunigung und vertikalbeschleunigung einerseits eine dynamische Anpassung der Auslöseschwellwerte erfolgt, indem bei einem einen instabilen Fahrzeugzustand anzeigenden hohen Wert dieses Quotienten eine niedrige Auslöseschwelle gesetzt wird und andererseits direkt und unmittelbar die Sicherheitseinrichtung ausgelöst wird, falls der Wert dieses Quotienten eine vorbestimmte feste Quotientenschwelle überschreitet. Bei dieser Ausführungsform läßt sich eine verbesserte Differenzierung nach Fire-Szenarien und No-Fire-Szenarien erzielen.

Bei einer weiteren bevorzugten Ausführungsform kann anstelle eines Beschleunigungsaufnehmers zur Erfassung der Lateralbeschleunigung ein Neigungssensor zur Messung des Neigungswinkels vorgesehen werden, wobei anhand des durch die Vertikalbeschleunigung und den Neigungswinkel charakterisierten Fahrzeugzustandes die dynamischen Auslöseschwellwerte eingestellt werden. insbesondere können die Sensorwerte des Neigungssensor dazu verwendet werden, um die Meßwerte mit einem dem statischen Kippwinkel des Kraftfahrzeuges entsprechenden Kippwinkel zu vergleichen, um bei einer Überschreitung des statischen Kippwinkels direkt die Sicherheitseinrichtung auszulösen. Damit wird sichergestellt, daß bei einem solchen Überschlagszenario, also bei einem statischen Überschlag immer eine Auslösung der Sicherheitseinrichtung erfolgt.

Desweiteren kann bei einer anderen vorteilhaften Ausführungsform anhand des die Vertikalbeschleunigung und die Drehgeschwindigkeit charakterisierenden Fahrzeugzustandes die Plausibilität des Neigungswinkels bewertet werden, so daß bei einem plausiblem Wert des Neigungswinkels dieser als aktueller Wert des Neigungswinkels gesetzt, gleichzeitig dieser als plausibel bewertete wert mit einem dem statischen Kippwinkel des Kraftfahrzeuges entsprechenden Kippschwellwert verglichen und die Sicherheitseinrichtung ausgelöst wird, falls der Kippschwellwert den Betrag dieses Wertes überschreitet. Die Überprüfung der Plausibilität ist deshalb vorteilhaft, da damit No-Fire-Szenarien darstellende Fahrsituationen, wie beispielsweise das Durchfahren einer Steilwand, gut erkennbar sind, aber gleichzeitig bei extrem langsamen Überschlägen, sogenannten "quasistatischen Überschlägen", bei denen die Auslöseschwellwerte nicht überschritten werden, die Auslösung dann aber bei Überschreitung des Kippschwellwertes erfolgen kann.

Liegt dagegen kein plausibler Wert des Neigungswinkels vor, wird die während des Fahrbetriebes des Kraftfahrzeuges erfolgte Änderung des Neigungswinkels mittels einer Integration der Drehgeschwindigkeit bestimmt und mit dem Startwinkel addiert und die Summe als aktueller Neigungswinkel gesetzt.

Schließlich können in Abhängigkeit des gesetzten aktuellen Wertes des Neigungswinkels die Werte der Auslöseschwellen an den durch diesen Neigungswinkel charakterisierten Fahrzeugzustand angepaßt werden.

Ausführungsbeispiele von Sicherheitssystemen mit einem Auslösealgorithmus, der gemäß des erfindungsgemäßen Verfahrens erzeugt ist, sind nachstehend ausführlich erläutert und anhand der Figuren dargestellt.

Es zeigen

Fig. 1: $\omega$-$\alpha$-Graph der Gleichung (1) als theoretische Überschlag-Kennlinie,

Fig. 2: Ein Blockschaltbild eines Sicherheitssystems mit einem erfindungsgemäß erzeugten Auslösealgorithmus, das einen Drehratensensor und drei Tiefpaßfilterfunktionen zur Auswertung der Sensorsignale aufweist,

Fig. 3: Ein Ablaufdiagramm zur softwaremäßigen Realisierung des sicherheitssystems gemäß Figur 1,

Fig. 4: Ein $\omega$-$\alpha$ -Diagramm des in dem Sicherheitssystems gemäß Figur 2 implementierten Auslösealgorithmus mit dem Auslöseverhalten der einzelnen Auslösezweige,

Fig. 5: Ein Sicherheitssystem gemäß Fig. 1 mit einem zusätzlichen Beschleunigungsaufnehmer in z-Richtung bzw. einem zusätzlichen Neigungssensor,

Fig. 6: Ein gemäß Figur 5 modifiziertes Ausführungsbeispiel,

Fig. 7: Ein Ablaufdiagramm zur softwaremäßigen Realisierung des Ausführungsbeispiels gemäß Figur 5,

Fig. 8: Ein Blockschaltbild gemäß Figur 1 mit zwei zusätzlichen Beschleunigungsaufnehmern in z- und y-Richtung,

Fig. 9: Ein Blockschaltbild gemäß Figur 1 mit einem zusätzlichen Neigungssensor in y-Richtung und einem zusätzlichen Beschleunigungsaufnehmer in z-Richtung,

Fig. 10: Ein Blockschaltbild eines Ausführungsbeispieles gemäß Figur 8, bei dem hinsichtlich der Sensorwerte des Neigungssensors eine Plausibilitätsprüfung durchgeführt wird, und

Fig. 11: Ein Ablaufdiagramm zur Bewertung der Plausibilität des von einem Neigungssensor erzeugten $\alpha$-wertes.

In den Figuren sind gleiche Funktionsblöcke bzw. gleichwirkende Teile mit den gleichen Bezugszeichen versehen. Dabei sind die Blockschaltbilder derart aufzufassen, daß die dargestellten Funktionsblöcke sowohl mit analogen Bauteilen als auch hinsichtlich ihrer Funktion softwaremäßig mittels eines Prozessors realisierbar sind.

Die Beschreibung der Figur 1 erfolgte schon in der Beschreibungseinleitung und soll daher nicht wiederholt werden.

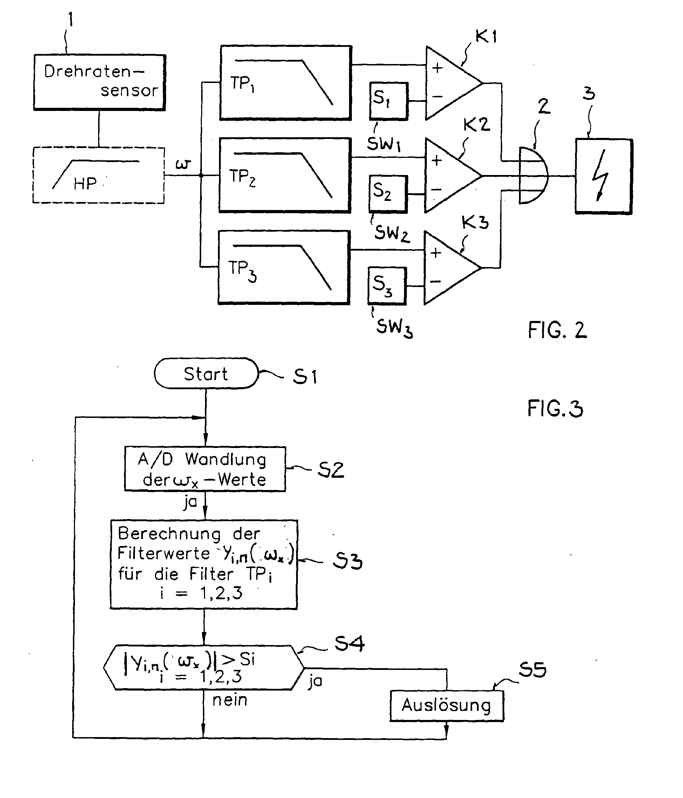

Figur 2 zeigt als erstes Ausführungsbeispiel des erfindungsgemäßen Sicherheitssystems eine Anordnung, bestehend aus einem Drehraten- oder Gyrosensor 1, der ein zur Winkelgeschwindigkeit $\omega_x$ (Drehrate) um die Längsachse (x-Achse) eines Fahrzeuges proportionales Signal erzeugt, das einem Hochpaßfilter HP, das optional eingesetzt werden kann, zugeführt wird und Tiefpaßfilter $TP_1$, $TP_2$ und $TP_3$, im allgemeinen 1. Ordnung, denen die gefilterten Signale des Hochpaßfilters HP direkt zur Auswertung weitergeleitet werden.

Die Ausgangssignale der Tiefpaßfilter $TP_1$, $TP_2$ bzw. $TP_3$ werden jeweils dem nicht-invertierenden Eingang von Komparatoren $K_1$, $K_2$ bzw. $K_3$ zugeführt, die die gefilterten Signale mit den an den invertierenden Eingängen der Komparatoren $K_1$, $K_2$ bzw. $K_3$ angelegten Auslöseschwellwerten $S_1$, $S_2$ bzw. $S_3$ vergleichen, wobei diese Auslöseschwellwerte von Schweilwertschaltung $SW_1$, i=1, 2, 3 erzeugt werden.

Sobald an den Komparatoren $K_1$, $K_2$ oder $K_3$ eines der gefilterten Signale eine der Auslöseschwellwerte $S_l$, mit i=1, 2, 3 überschreitet, wird das von dem jeweiligen Komparator $K_l$ - oder von mehreren Komparatoren erzeugte - H-Signal über ein OR-Gatters 2 einer Zündendstufe 3 zur Auslösung einer nicht dargestellten Sicherheitseinrichtung zugeführt.

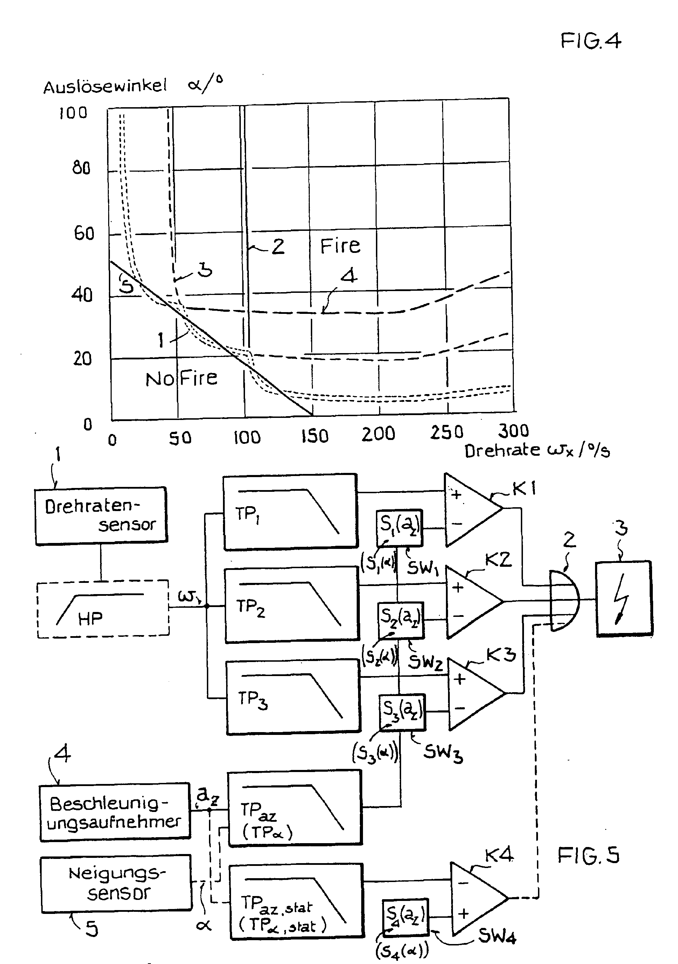

Die in Figur 2 dargestellten Einheiten - ausgenommen Drehratensensor 1 und Zündendstufe 3 - werden mittels eines Mikroprozessors im Steuergerät des Sicherheitssystems durch Implementation eines erfindungsgemäßen Auslösealgorithmus mit entsprechenden Tiefpassfilterfunktionen $Y_{1,n}$, $Y_{2,n}$, $Y_{3,n}$ n =1,2,.. realisiert. Dabei handelt es sich bei den drei Tiefpaßfilter $TP_1$, $TP_2$ und $TP_3$ um bekannte Tiefpaßfilter, realisiert als digitale Filter, beispielsweise als IIR-Filter, im allgemeinen 1. Ordnung, die sich durch verschieden hohe Grenzfrequenzen $f_{gi}$, i = 1, 2, 3 und Auslöseschwellwerte $S_i$, i = 1, 2, 3 unterscheiden. Die Grenzfrequenzen $f_{gi}$ und Auslöseschwellen $S_i$ werden derart bestimmt, daß die resultierende Auslösekennlinie die theoretische Überschlag-Kennlinie gemäß Gleichung (1) näherungsweise approximiert, deren Parameter $\omega_{grenz}$ und $\alpha_{kipp}$ fahrzeugspezifisch festgelegt werden. Figur 4 zeigt die Auslösekennlinie als $\omega$-$\alpha$-Graph 1 des implementierten Auslösealgorithmus sowie das Auslöseverhalten der drei Einzelzweige in Form der $\omega$-$\alpha$-Graphen 2, 3, und 4, wobei auch die in Figur 1 dargestellte theoretische Überschlag-Kennlinie als $\omega$-$\alpha$-Graph 5 eingetragen ist.

Das Fire-Gebiet, wo also eine Auslösung der Sicherheitseinrichtung erwünscht ist, sind diejenigen $\omega$-$\alpha$-Kombinationen, für die mit der resultierenden Auslösekennlinie 1 als Funktion $\alpha(\omega)$ gilt: $\alpha \geq \alpha(\omega)$. Das Gebiet derjenigen $\omega$-$\alpha$-Kombinationen mit $\alpha < \alpha(\omega)$ stellt das No-Fire-Gebiet dar, bei dem eine Auslösung der Sicherheitseinrichtung unterbleiben soll. Der erste Auslösezweig mit dem ersten Tiefpassfilter $TP_1$ und der zugehörigen Auslöseschwelle $S_1$ entspricht dem $\omega$-$\alpha$-Graphen 2, wobei die Grenzfrequenz $f_{g1}$ einige Hz beträgt und die Auslöseschwelle hieran arigepaßt ist. Dieser Zweig dient zur schnellen Auslösung bei einer hohen Drehrate $\omega_x$, nämlich bei Werten größer als 100 °/s, die jedoch bei typischen Überschlagszenarien kaum auftreten. Die Kurve 2 zeigt auch, daß die untere Schwelle, bis zu der keine Auslösung erfolgt, relativ hoch liegt, nämlich bei einer Drehrate des Fahrzeuges um seine x-Achse von nahezu 100 °/s. Die beiden anderen Auslösezweige sind an Überschlagszenarien mit einer geringeren Drehrate angepaßt, die gegenüber den zuvor genannten Situationen häufiger auftreten. Die Kurve 4 des dritten Auslösezweiges entspricht dem dritten Tiefpassfilter $TP_3$ mit zugehöriger Schwellwertschaltung SW$_3$. Dieser Auslösezweig mit der niedrigsten Grenzfrequenz $f_{g3}$ in der Größenordnung von einigen 1/100-Hz und einem hieran angepaßten Auslöseschwellwert $S_3$ löst bei langsamen Überschlägen aus, wobei auch die untere Grenze, unterhalb der keine Auslösung erfolgt, ebenfalls niedrig, nämlich bei einer Drehrate des Fahrzeuges von ca. 10°/s liegt. Die Kurve 2 deckt den dazwischen liegenden Bereich ab und erfaßt damit typische Überschlagszenarien. Die zugehörige Grenzfrequenz $f_{g2}$ liegt bei einigen 1/10-Hz mit einem hieran angepaßten Auslöseschwellwert $S_2$. Die optimierten Werte werden aufgrund von simulierten Sensorsignaturen oder anhand von reellen Crashdaten und letztendlich auch durch konkrete Fahr- und Crashversuche ermittelt. Ziel ist es, diese Parameter derart festzulegen, daß die größtmögliche Sensitivität hinsichtlich aller Fire-szenarien erzielt wird, jedoch gleichzeitig bei No-fire-szenarien eine Auslösung unterbleibt.

Betrachtet man das Auslöseverhalten des Gesamtsystems anhand der Kurve 1, so ist zu erkennen, daß die untere Grenze von $\omega_x$, bei der keine Auslösung mehr erfolgt, der Grenze des dritten Auslösezweiges (entsprechend Kurve 4 aus Figur 4) entspricht. Ferner nimmt bei einer Drehrate oberhalb von 250 °/s der Auslösewinkel $\alpha$ linear zu. Die Ursache hierfür liegt in dem begrenzten Meßbereich des Drehratensensors 1.

Das in Figur 2 beschriebene Ausführungsbeispiel für eine Überschlagserkennung mit dem erfindungsgemäßen Auslösealgorithmus zeigt drei Tiefpaßfilterfunktionen, jedoch kann entsprechend den Anforderungen an das Auslöseverhalten dieser Auslösealgorithmus auch auf zwei Tiefpaßfilterfunktionen beschränkt oder auf mehr als drei Tiefpaßfilterfunktionen erweitert werden, wobei im letzteren kleinere Abstände zwischen den Grenzfrequenzen gewählt werden können. Der entsprechende Auslösealgorithmus wird in einem Steuergerät, das einen Mikroprozessor enthält, implementiert.

Wie oben schon ausgeführt, kann das in Figur 2 dargestellte Hochpaßfilter HP optional - unabhängig von der Anzahl der gewählten Tiefpaßfilterfunktionen - eingesetzt werden. Zweck dieser Hochpaßfilterfunktion ist es, eine beispielsweise durch Temperaturschwankungen hervorgerufene niederfrequente Drift des Drehratensensorsignals zu eliminieren und so das Drehratensensorsignal zu stabilisieren. Gegebenenfalls kann auf diese Hochpaßfilterfunktion verzichtet werden, wenn die Temperaturschwankungen nur zu einer geringen Drift führen.

Die bei einer softwaremäßigen Realisierung von einem Mikroprozessor vorzunehmenden Verarbeitungsschritte sind in dem Ablaufdiagramm der Figur 3 dargestellt. Hiernach werden nach dem Start (Schritt S1) zunächst die Signale des Drehratensensors als $\omega_x$-Werte digitalisiert (Schritt S2). Anschlie-Bend werden im Schritt S3 die Filterwerte der $Y_{1,n}(\omega)$, $Y_{2,n}(\omega)$ und $Y_{3,n}(\omega)$ der Filter TP$_1$, TP$_2$ und TP$_3$, realisiert als Filterfunktionen $Y_{1,n}$, $Y_{2,n}$ und $Y_{3,n}$, berechnet und nachfolgend ein Vergleich mit den Auslöseschwellwerten $S_1$, $S_2$ und $S_3$ durchgeführt (Schritt S4). Falls einer dieser Auslöseschwellwerte $S_1$, $S_2$ oder $S_3$ überschritten wird, erfolgt mit Schritt S5 die Auslösung einer Sicherheitseinrichtung, beispielsweise eines Gurtstraffers, eines Sideairbags oder eines Überschlagbügels. Bleiben alle gefilterten $\omega_x$-Werte unter diesen Auslöseschwellwerten, beginnt das Verfahren wieder mit Schritt S2.

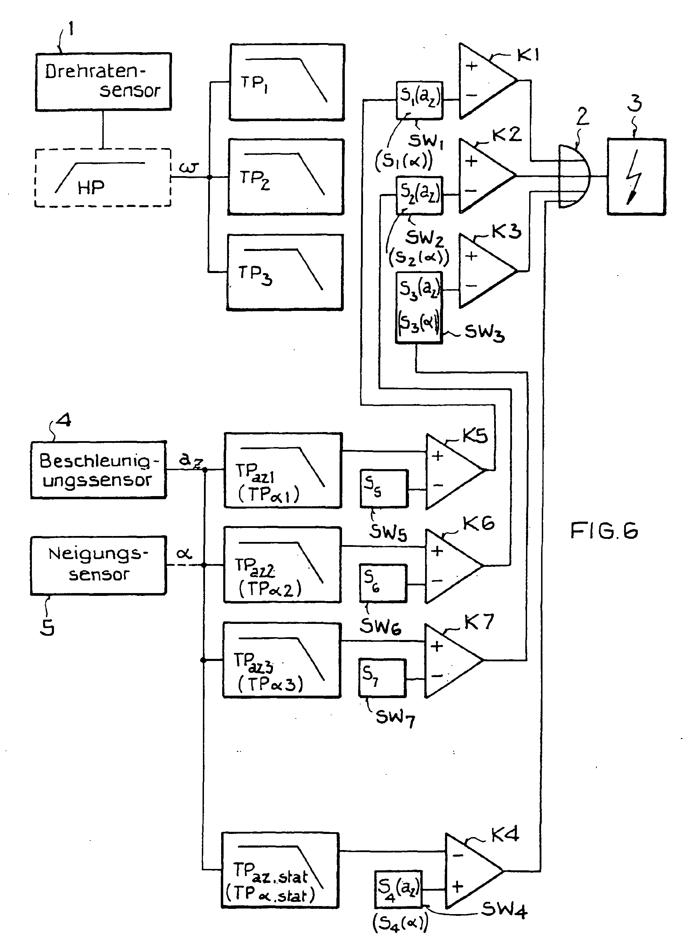

Eine Verbesserung des Auslöseverhaltens wird mit einem Ausführungsbeispiel gemäß Figur 5 gegenüber jenem nach Figur 2 mit einem zusätzlich Beschleunigungssensor 4 in z-Richtung oder alternativ hierzu ein Neigungssensor 5 erzielt, dessen Signale als $a_z$-Werte bzw. $\alpha$ - Werte von einer Tiefpassfilterfunktion $Y_{az,n}$ bzw. $Y_{\alpha,n}$ verarbeitet werden, die in Figur 5 als Tiefpassfilter TP$_{az}$ bzw. TP$_\alpha$ dargestellt ist.

Die zusätzliche Information des Beschleunigungssensors 4 wird dazu verwendet, um einerseits eine dynamische Anpassung der Auslöseschwellwerte $S_i(a_z)$ (i=1, 2, 3) vorzunehmen, so daß die Auslösung bei schnellen Überschlägen schneller und bei langsamen Überschlägen früher erfolgt und andererseits bei extremen, im normalen Fahrbetrieb des Fahrzeuges selten auftretende Situationen, wie zum Beispiel in einer überhöhten Kurve, eine Auslösung unterbleibt. Das Beschleunigungssignal $a_z$ liefert hierzu zusätzliche Informationen über die Stabilität des Fahrzeuges. Bei einem $a_z$-Wert von wenigstens 1g (=Erdbeschleunigung) kann von einem stabilen Fahrzeugzustand ausgegangen werden. In einem solchen Fall werden die $a_z$-Werte von der Tiefpassfilterfunktion verarbeitet und dienen zur Anpassung

der Auslöseschwellwerte $S_i(\alpha)$ (i=1, 2, 3) an diesen Fahrzeugzustand, indem die Auslöseschwellwerte erhöht werden. Umgekehrt muß bei einem sehr niedrigen $a_z$-wert von einem weniger stabilen Fahrzustand des Fahrzeuges ausgegangen werden, mit der Folge, daß die Auslöseschwellwerte erniedrigt werden. Die Auslöseschwellwerte $S_i(\alpha)$ stellen daher eine Funktion $f_i(Y_{az}(a_z))$ des gefilterten Beschleunigungssignals $a_z$ dar, das somit neben der Information aus den $\omega_x$-Werten hinsichtlich der Fahrzeuglage eine redundante Information liefert.

Mit dieser dynamischen Schwellwertanpassung können auch bezüglich der Fahrzeuglage extreme Situationen sicher detektiert werden. Dies ist zum einen das Durchfahren einer Steilkurve und zum anderen das Befahren einer Schraubrampe mit anschließendem Überschlag. Die erstgenannte Situation stellt ein No-Fire-Szenario, die letztgenannte ein Fire-Szenario dar. Das Erkennen und richtige Interpretieren dieser Situationen wird dadurch erschwert, daß das anfängliche Verhalten des $a_z$-Meßwertes bei beiden Situationen identisch ist, nämlich ein schnelles Ansteigen auf einen hohen wert $a_z$ mit $a_z$ >1. Danach fällt der $a_z$-Meßwert bei der Schraubrampe auf einen kleinen Wert mit $a_z$ < <1 ab, da das Fahrzeug in den schwerelosen Zustand oder einen seitlichen, schwereloseähnlichen Zustand übergeht, während im anderen Fall der $a_z$-Meßwert auf einem positiven g-Wert mit $a_z$ > 1 bleibt, der während des Befahrens in der Steilkurve nahezu konstant ist. Die dynamische Anpassung erfolgt nun dadurch, daß die Schwellwerte dem $a_z$-wert nachgeführt werden, d. h., daß bei hohem $a_z$-Wert die Schwellen hochgesetzt und bei abnehmenden $a_z$-Wert ebenfalls erniedrigt werden. Damit wird sichergestellt, daß beim Befahren der Steilkurve eine Auslösung unterbleibt.

Bei Verwendung des Neigungssensors 5 anstelle des Beschleunigungssensors 4 werden die dadurch zusätzlich gewonnenen Informationen (als $\alpha$-Werte) über die Stabilität des Fahrzeuges derart eingesetzt, daß bei entsprechend großen $\alpha$-Werten angenommen wird, daß nur noch eine geringe Fahrstabilität vorliegt, also die Auslöseschwellwerte herabgesetzt werden müssen, so daß schon bei geringen $\omega_x$-werten ausgelöst wird. Da der Neigungssensor 5 auch das Vorzeichen des Kippwinkels liefert, können die Auslöseschwellwerte asymmetrisch angepaßt werden, d. h., wenn die $\omega_x$-Werte der Drehrate und die $\alpha$-Werte das gleiche Vorzeichen haben, wird ein niedriger Auslöseschwellwert eingestellt, wenn dagegen unterschiedliche Vorzeichen vorliegen, wird ein hoher Schwellwert verwendet.

Zusätzlich zu dem Tiefpaßfilter $TP_{az}$ bzw. $TP_\alpha$ kann zwecks Realisierung einer Kippwinkeldetektion ein Tiefpassfilter $TP_{az,stat}$ bzw. $TP_{\alpha,stat}$, ein Komparator $K_4$ und eine zugehörige Schwellwertschaltung $SW_4$ zur Erzeugung eines Schwellwertes $S_4(a_z)$ bzw. $S_4(\alpha)$ vorgesehen werden, der dem statischen Kippwinkel des Fahrzeuges entspricht. Überschreitet der gefilterte $a_z$-Wert bzw. der gefilterte $\alpha$-Wert den Schwellwert $S_4(a_z)$ bzw. $S_4(\alpha)$, erfolgt über den Komparator $K_4$ und dem OR-Gatter 2 die Auslösung der Sicherheitseinrichtung 3.

Das Sicherheitssystem gemäß Figur 6 zeigt eine weitere Realisierung der dynamischen Schwellwertanpassung, wobei dieses Sicherheitssystem im Vergleich zu jenem gemäß Figur 5 anstelle eines den Schwellwertschaltungen $SW_i$, i = 1,2,3 vorgeschalteten Tiefpassfilters $TP_{az}$, drei Tiefpassfilter $TP_{azi}$, i = 1,2,3 aufweist, deren Ausgang auf jeweils eine Schwellwertschaltung $SW_i$, i = 1,2,3 geführt sind. Dabei ist jeweils zwischen einer Schwellwertschaltung $SW_i$, i = 1,2,3 und einem Tiefpassfilter $TP_{azi}$, i = 1,2,3 ein Komparator $K_5$, $K_6$ bzw. $K_7$ mit jeweils einer Schwellwertschaltung $SW_5$, $SW_6$ bzw. $SW_7$ vorgesehen.

Der bei einer softwaremäßigen Realisierung dieses Sicherheitssystems zu implementierende Algorithmus weist als erweiterter Auslösealgorithmus entsprechend diesen drei Tiefpassfilter $TP_{azi}$, i = 1,2,3, den Komparatoren und den Schwellwertschaltungen $SW_5$, $SW_6$ und $SW_7$ Tiefpassfilterfunktionen $Y_{az1,n}$ $Y_{az2,n}$ und $Y_{az3,n}$ mit entsprechenden Grenzfrequenzen $f_{g,az1}$, $f_{g,az2}$ und $f_{g,az3}$ und jeweils zugeordnete Schwellwerte $S_i$, i=5,6,7 auf.

Die Grenzfrequenzen $f_{g,az1}$, $f_{g,az2}$ und $f_{g,az3}$ der Tiefpassfilter $TP_{azi}$, i=1,2,3 als auch die Schwellwerte $S_i$, i=5,6,7 der Komparatoren $K_i$, i=5,6,7 sind unterschiedlich und so bestimmt, daß in absteigender Folge das erste Tiefpassfilter $TP_{az1}$ die höchste Grenzfrequenz und das dritte Tiefpassfilter $TP_{az3}$ die niedrigste Grenzfrequenz aufweist. Für die Schwellwerte $S_i$, i = 5,6,7 der Schwellwertschaltung $SW_5$, $SW_6$, $SW_7$ gilt entsprechendes. Wird einer der Schwellwerte $S_i$, i=5,6,7 von dem Ausgangssignal eines vorgeschalteten Tiefpassfilters $TP_{azi}$ i=1,2,3 unterschritten, erniedrigt sich die Auslöseschwelle $S_i(a_z)$ i=1,2,3 der jeweils nachgeschalteten Schwellwertschaltung $SW_i$ i=1,2,3 um eine vorbestimmte Stufe; steigt das Ausgangssignal des entsprechenden Tiefpassfilters wieder über den Schwellwert an, wird die Auslöseschwelle ebenfalls erhöht.

Anstelle des Beschleunigungsaufnehmers 4 in z-Richtung kann entsprechend Figur 5 ein Neigungssensor 5 eingesetzt werden, wie dies durch eine gestrichelt gezeichnete Verbindungslinie zu den Tiefpassfiltern $TP_{ai}$, I=5,6,7 in Figur 6 dargestellt ist. Entsprechend wie dort schon beschrieben, werden nach Filterung der digitalisierten $\alpha$-Werte durch die Tiefpaßfilter $TP_{ai}$, I=5,6, 7 (realisiert als Tiefpassfilterfunktionen $Y_{\alpha i,n}$, I=1,2,3) diese Werte zur dynamischen Anpassung der Auslöseschwellwerte $S_i(\alpha)$, i=1, 2, 3 über die Schwellwertschaltungen bestehend aus den Komparatoren K, und den Schwellwert-erzeugungsschaltungen $S_l$, i=1,2,3 herangezogen, wie dies im Zusammenhang mit der Erläuterung der Figur 5 erfolgte. Auch hier wird angenommen, daß bei entsprechend großen $\alpha$-Werten nur noch eine geringe Fahrstabilität vorliegt, also die Auslöseschwellwerte herabgesetzt werden müssen, so daß schon bei geringen $\omega_x$-Werten ausgelöst wird. Da der Neigungssensor 5 auch das Vorzeichen des Kippwinkels liefert, können ebenso die Auslöseschwellwerte asymmetrisch angepaßt werden, d. h., wenn die $\omega_x$-Werte der Drehrate und die $\alpha$-Werte das gleiche Vorzeichen haben, wird ein niedriger Auslöseschwellwert eingestellt, wenn dagegen unterschiedliche Vorzeichen vorliegen, wird ein hoher Schwellwert verwendet.

Um die Sicherheit einer Auslösung bei einem langsamen Überschlag, also einem sogenannten statischen Überschlag zu erhöhen, kann auch bei diesem Ausführungsbeispiel zusätzlich entsprechend dem Ausführungsbeispiel gemäß Figur 5 ein weiteres in der Figuren 6 als Option (zusammen mit einem Komparator $K_4$ und einer Schwellwertschaltung $SW_4$) dargestelltes Tiefpaßfilter $TP_{az,stat}$ bzw. $TP_{\alpha,stat}$ dem Beschleunigungssensor 4 bzw. dem Neigungssensor 5 nachgeschaltet bzw. in dem erweiterten Auslösealgorithmus als weitere Tiefpassfilterfunktion $Y_{az,stat,n}$ bzw. $Y_{a,stat,n}$ realisiert werden. Mit dem Tiefpaßfilter $TP_{az,stat}$ werden zunächst die Vibrationen aus dem Beschleunigungssignal $a_z$ gefiltert und einem Komparator $K_4$ an dessen invertierenden Eingang zugeführt. Eine Schwellwertschaltung $SW_4$ erzeugt einen dem statischen Kippwinkel des Fahrzeuges entsprechenden Auslöseschwellwert $S_4$, der bei Unterschreitung durch den gefilterten $a_z$-wert über eine Verbindung zum OR-Gatter 2 zur Auslösung einer Sicherheitseinrichtung über die Zündendstufe 3 führt. Diese Unterschreitung wird als Übergang von einer stabilen Fahrzeuglage, bei der der Beschleunigungssensor 4 einen Wert um 1g anzeigt, in eine instabile Fahrzeuglage - gekennzeichnet durch einen niedrigen $a_z$-Wert des Beschleunigungssensors 4 - interpretiert. Der zugehörige Auslöseschweüwert $S_4$ wird daher entsprechend niedrig - beispielsweise 0,5g - gewählt.

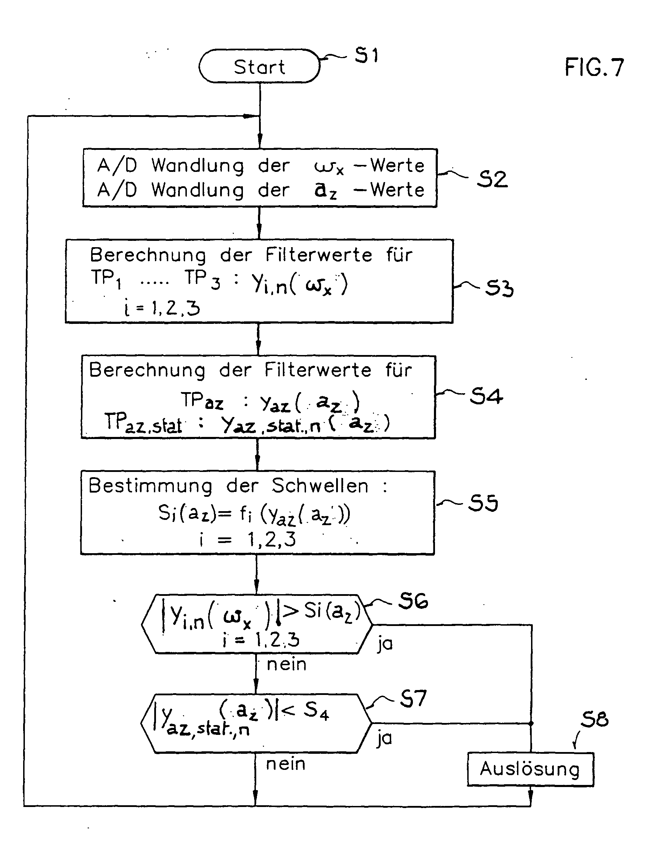

Zur softwaremäßigen Realisierung des für das Sicherheitssystem gemäß Figur 5 erzeugten erweiterten Auslösealgorithmus zeigt Figur 7 ein Ablaufdiagramm, das im wesentlichen dem aus Figur 3 entspricht. Die Unterschiede liegen lediglich darin, daß zusätzlich in Schritt S2 auch die $a_z$-Werte digitalisiert, in einem Schritt S4 die entsprechenden Filterwerte $Y_{az,n}(a_z)$ und $Y_{az,stat,n}(a_z)$ erzeugt werden und in Abhängigkeit dieser Filterwerte die Einstellung der Auslöseschwellwerte $S_i(a_z)$ als Funktion $f_i(Y_{az,n}(a_z))$, i=1, 2, 3 und $S_4$ als Funktion $f_i(Y_{az,stat,n}(a_z))$ erfolgt. Die verbleibenden Schritte S6 und S7 entsprechen jenen aus Figur 3, wobei insbesondere mit Schritt S7, wenn also die Auslöseschwellwerte $S_i(a_z)$, i=1, 2, 3 nicht überschritten werden, ein Vergleich der Filterwerte $|Y_{az,stat,n}(a_z)|$ mit dem Auslöseschwellwert $S_4$ als statischen Kippwinkel durchgeführt wird.

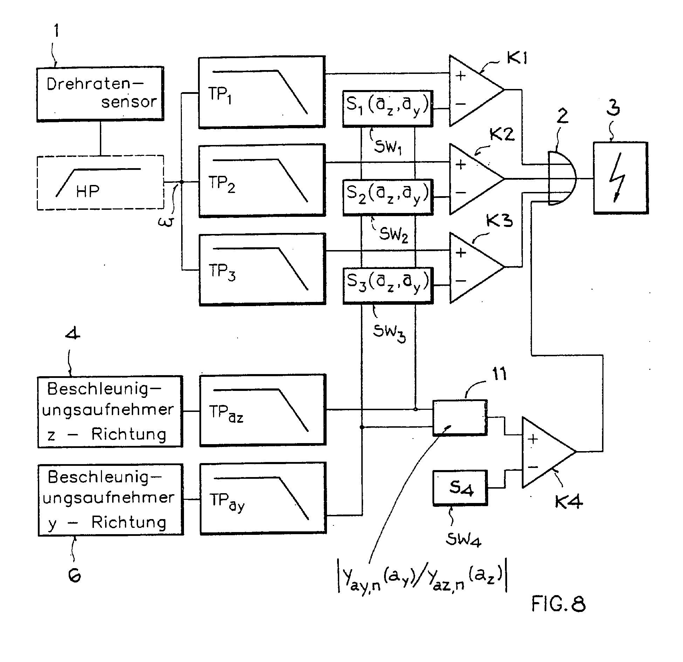

Die dynamische Anpassung der Auslöseschwellwerte $S_i$ (i = 1, 2, 3) kann gemäß dem Ausführungsbeispiel nach Figur 8 auch mit Hilfe der Transversal- und Vertikalbeschleunigung des Fahrzeuges durchgeführt werden. Hierzu dienen vorzugsweise der DC-fähige Beschleunigungssensor 4 in z-Richtung und der ebenfalls vorzugsweise DC-fähiger Beschleunigungssensor 6 in y-Richtung, denen jeweils ein Tiefpaßfilter $TP_{az}$ bzw. $TP_{ay}$ nachgeschaltet ist, die im Prozessor eines Steuergerätes als Filterfunktionen $Y_{az,n}$ und $Y_{ay,n}$ implementiert sind. Beide von den Filterfunktionen verarbeiteten Beschleunigungswerte, also die gefilterten $a_z$- und $a_y$-Werte $Y_{az,n}(a_z)$ und $Y_{ay,n}(a_y)$ werden zur dynamischen Anpassung der Auslöseschwellwerte $S_i(a_z,a_y)$ (i = 1, 2, 3) den Schweilwertschaltungen $SW_i$ (i = 1, 2, 3) zugeleitet, werden also in Abhängigkeit der Filterfunktionswerte $Y_{az,n}(a_z)$ und $Y_{ay,n}(a_y)$ eingestellt. Aus diesen gefilterten Beschleunigungswerten kann zusätzlich der Betrag und die Richtung der Beschleunigung, und damit auch der Neigungswinkel ermittelt werden, um entsprechend die Auslöseschwellwerte anzupassen, wie dies oben schon dargestellt wurde.

Desweiteren kann bei Verwendung von DC-fähigen Beschleunigungssensoren über das Verhältnis von Lateralbeschleunigung zu Vertikalbeschieunigung die stabilität des aktuellen Fahrzeugzustandes bewertet werden, indem beispielsweise bei einem hohen Wert dieses Verhältnisses, der also einen instabilen Zustand anzeigt, die Auslöseschwellwerte $S_i(a_z,a_y)$ (i=1, 2, 3) herabgesetzt werden. Ferner kann das Vorzeichen der Lateralbeschleunigung dazu benutzt werden, um die Auslöseschwellwerte vom Vorzeichen der Drehrichtung des Fahrzeugüberschlages abhängig zu machen, und zwar derart, daß bei identischen Richtungen der Drehbewegung und Lateralbewegung ein niedrigerer Auslöseschwellwert gesetzt wird als bei ungleichen Bewegungsrichtungen.

Schließlich kann mittels einer Funktion, dargestellt in einer Schaltungsanordnung 11, das Verhältnis

$$\left| \frac{Y_{ay,n}(a_y)}{Y_{az,n}(a_z)} \right|$$

der Filterwerte $Y_{ay,n}(a_y)$ und $Y_{az,n}(a_z)$ von Lateral- zu Vertikalbeschleunigung berechnet werden und direkt über einen Komparator $K_4$ mittels einer Schwellwertschaltung $SW_4$ zur Erzeugung eines festen Auslöseschwellwertes $S_4$ zur Auslösung einer Sicherheitseinrichtung verwendet werden. Da dieser Wert annähernd proportional zum Wert des Neigungswinkel des Fahrzeuges ist, kann der Auslöseschwellwert $S_4$ entsprechend dem statischen Kippwinkel $\alpha_{klpp}$ des Fahrzeuges gesetzt werden.

Das Ablaufdiagramm zur softwaremäßigen Realisierung des Sicherheitssystems nach Figur 8 entspricht im wesentlichen denjenigen Ausführungsbeispielen, die oben beschrieben wurden und soll daher nicht dargestellt werden.

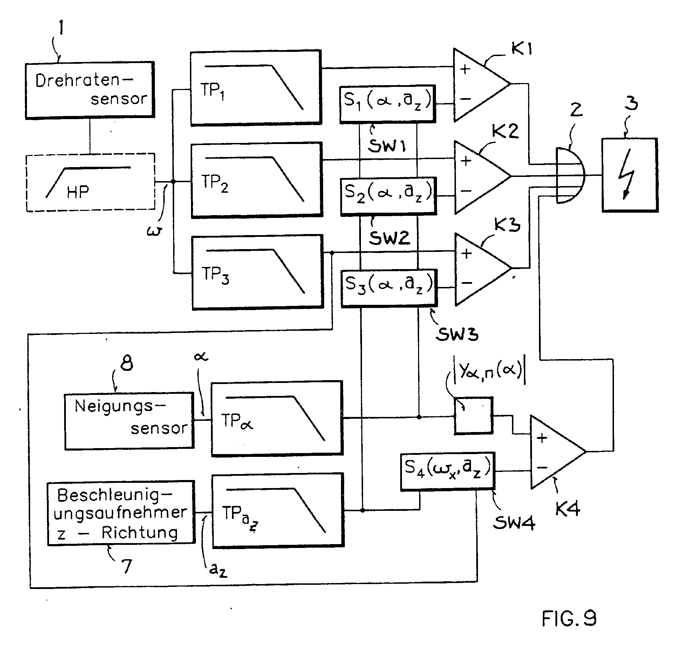

Das Ausführungsbeispiel eines Sicherheitssystems nach Figur 9 ist eine Kombination der beiden in Figur 5 dargestellten Alternativen, wonach zusätzlich zu einem Drehratensensor 1 ein Beschleunigungssensor 7 in z-Richtung und ein Neigungssensor 8 in y-Richtung vorgesehen sind. Die dynamische Anpassung der Auslöseschwellwerte $S_i(\alpha; a_z)$, i=1,2,3 erfolgt in Abhängigkeit der mit einer entsprechenden Tiefpassfilterfunktion $Y_{a,n}$ bzw. $Y_{az,n}$ gefilterten $\alpha$-Werte des Neigungssensors 8 und $a_z$-Werte des Beschleunigungssensors 7, indem bei hohen $a_z$-Werten die Auslöseschwellwerte unter Berücksichtigung der Richtungsinformation des $\alpha$-Wertes heraufgesetzt und im umgekehrten Fall, also bei niedrigen $a_z$-Werten die Auslöseschwellwerte herabgesetzt werden.

Zwecks Realisierung eines statischen Auslösezweiges werden die gefilterten $\alpha$-Werte $Y_{\alpha,n}(\alpha)$ nicht nur den

Schweilwertschaltungen $SW_i$, i=1, 2, 3 zugeführt, sondern deren Betragswerte auch an den nicht-invertierenden Eingang eines weiteren Komparator $K_4$, wobei an dessen invertierenden Eingang eine Schwellwertschaltung $SW_4$ angeschlossen ist. Diese Schwellwertschaltung $SW_4$ erzeugt in Abhängigkeit der ihr zugeführten gefilterten $\omega_x$-werte $Y_{3,n}(\omega_x)$ des Filters $TP_3$ und der gefilterten $a_z$-werte $Y_{az,n}(a_z)$ einen Auslöseschwellwert $S_4(\omega_x, a_z)$, der bei großen $a_z$-werten einen großen Wert aufweist, da solche $a_z$-Werte einen stabilen Fahrzeugzustand anzeigen. Steigen auch die $\omega_x$-Werte an, kann der Auslöseschwellwert mit der Folge einer unterbleibenden Auslösung weiter erhöht werden, da eine solche Situation ebenfalls auf eine stabile Fahrzeuglage, z. B. auf eine steilwand hindeutet. Bei kleinen $a_z$-Werten und gleichzeitig großen $\omega_x$-Werten wird dagegen der Auslöseschwellwert $S_4(\omega_x, a_z)$ herabgesetzt.

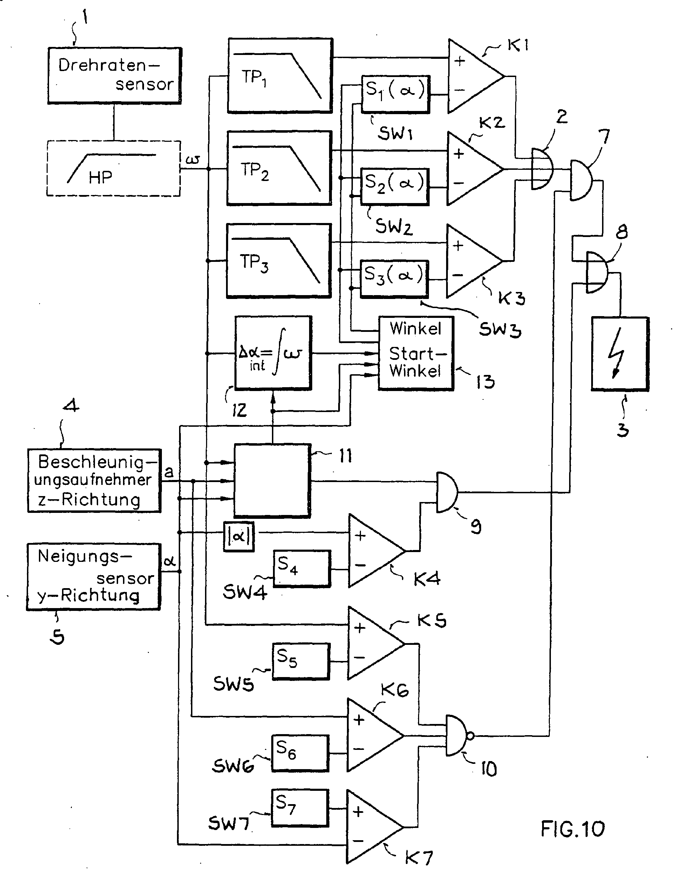

Das letzte Ausführungsbeispiel gemäß Figur 10 unterscheidet sich im wesentlichen von dem zuletzt erläuterten dadurch, daß zusätzlich aus den $\omega_x$-Werten durch Integration mittels einer Integratorschaltung 12 die Änderung des Neigungswinkel $\Delta a_{int} = \int \omega \, dt$ während des Fahrbetriebes berechnet wird, aus dem zusammen mit dem Startwinkel $\alpha_{start}$, der den Wert zu Beginn des Fahrbetriebes oder den zu Beginn der Routine des Auslösealgorithmus gesetzten Wert darstellt, der aktuelle Neigungswinkel $\alpha_{akt}$ bestimmt wird, der dann seinerseits für die nächste Routine als Startwinkel $\alpha_{start}$ gesetzt wird.

in Abhängigkeit des Startwinkels $\alpha_{start}$ (wobei die Neigungsrichtung berücksichtigt werden kann) erfolgt eine dynamische Anpassung der Auslöseschwellwerte $S_i(\alpha)$, wobei diese Winkelwerte $\alpha_{start}$ von einer Winkelbestimmungseinheit 13 den Schwellwertschaltungen $SW_i$ (i=1, 2, 3) zugeführt werden.

Des weiteren ist eine Plausibilitätseinheit 11 vorgesehen ist, die anhand der von dem Drehratensensor 1 gelieferten $\omega_x$-Werte und der von den Beschleunigungssensoren 4 und 5 gelieferten $a_z$- und $a_y$-Werten die von dem Neigungssensor 5 erzeugten $\alpha$-werte oder den auf der Basis der $a_z$- und $a_y$-werte berechneten statischen Winkel auf Plausibilität überprüft. Der Vorteil dieser Maßnahmen besteht darin, daß zum einen No-Fire-Szenarien besser bestimmbar sind und zum anderen eine genauere Information über den aktuellen Neigungswinkel erzeugbar ist. Durch die Plausibilitätsprüfung kann ein "falscher" statischer $\alpha$-Wert des Neigungssensors bzw. berechneter $\alpha$-wert erkannt werden, so daß eine Auslösung der Sicherheitseinrichtung trotz eines No-Fire-Ereignisses mit großer Wahrscheinlichkeit ausgeschlossen werden kann.

Die Gefahr der Anzeige eines "falschen" $\alpha$-Wertes beruht auf dem physikalischen Prinzip von üblichen Neigungssensoren. So gibt es Sensoren, die den Stand einer Flüssigkeit anzeigen und dadurch entsprechend langsam bzw. bei kurzen und heftigen Beschleunigung in ihrer Empfindlichkeitsrichtung zu einem "Überschwappen" führen und dadurch möglicherweise einen zu großen Wert anzeigen.

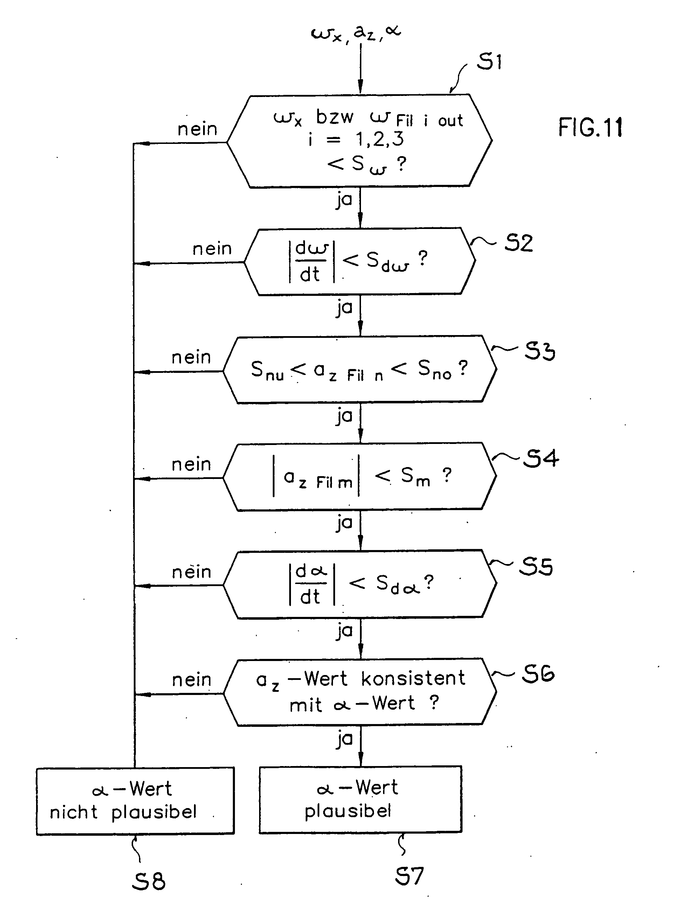

Auch die von Beschleunigungssensoren unter schnellen Bewegungen erzeugten Meßwerte (beispielsweise in z- und $\gamma$-Richtung) lassen die Berechnung eines Neigungswinkels aufgrund der auftretenden Trägheitskräfte nicht zu. Die Plausibilitätsprüfung dient daher dazu, einen statischen Winkel als solchen nur zu akzeptieren, wenn alle Meßwerte der Sensoren in bestimmten widerspruchsfreien Relationen zueinander stehen bzw. bestimmte Kriterien erfüllen, wie im Zusammenhang der Erläuterung der Figur 11 weiter unten dargestellt werden soll.

Desweiteren besteht das Problem, daß bei Verwendung eines Filters zur Glättung der Sensorsignale das System aus sensor und Filter bei schnellen Vorgängen zu träge reagiert. Mit der Plausibilitätsprüfung sollen auch die daraus resultierenden falschen Bewertungen des Sensorsignales vermieden werden.

Zunächst legt die Winkelbestimmungseinheit 13 den bei Inbetriebnahme des Fahrzeuges vorliegenden aktuellen Neigungswinkel $\alpha_{akt}$ als Startwinkel $\alpha_{start}$ fest. Ausgehend von diesem Startwinkel $\alpha_{start}$ erfolgt die Berechnung des aktuellen winkels $\alpha_{akt}$ durch Integration des $\omega_x$-Wertes durch die Integratoreinheit 12 und Addition des Startwinkels $\alpha_{start}$ gemäß $\alpha_{start} + \Delta a_{int}$.

Mit zunehmender Zeitdauer wird jedoch der durch Integration berechnete aktuelle Neigungswinkel $\alpha_{akt}$ aufgrund von Fehlertoleranzen vom tatsächlichen Neigungswinkel immer mehr abweichen. Daher wird mittels der Plausibilitätseinheit 11 eine Plausibilitätsprüfung der Sensorwerte durchgeführt und in Abhängigkeit des Prüfungsergebnisses von der Winkelbestimmungseinheit 13 der aktuelle Neigungswinkel $\alpha_{akt}$ entsprechend bestimmt.

Die Bedingungen, unter denen ein $\alpha$-Wert als plausibel bewertet wird, soll anhand des Ablaufdiagrammes nach Figur 11 erläutert werden. Zunächst muß der $\omega_x$-wert unter einer bestimmten Schwelle $S_\omega$ bleiben, um die aufgrund der Trägheit der in einem Neigungssensor vorhandenen Flüssigkeit oder der Trägheit des Systems "Beschleunigungssensor in $\gamma$-Richtung und Filter" auftretenden "falschen" werte auszuschließen (Schritt S1).

Gemäß Schritt S2 darf auch die Änderungsgeschwindigkeit des $\omega_x$-Wertes eine bestimmte Schwelle $S_{d\omega}$ nicht überschreiten. Wird diese Schwelle überschritten, bedeutet dies, daß auf die in einem Neigungssensor vorhandene Flüssigkeit Kräfte wirken, die zu einem "falschen" $\alpha$-Wert führen könnten.

Gemäß Schritt S3 dürfen die gefilterten $a_z$- Werte den Bedingungen eines stabilen und normalen Fahrzeugzustandes nicht widersprechen, also darf der $a_z$- Wert weder zu klein - da ansonsten Bodenwellen erfaßt oder ein großer Neigungswinkel vorliegt- noch zu groß sein, da dann Schlaglöcher erfaßt oder eine Steilwand durchfahren wird. Die Schwellen $S_{no}$ und $S_{nu}$ werden daher aufgrund von Fahrzeugdaten und Versuchen unter Berücksichtigung der Meßtoleranzen des $a_z$- Sensors festgelegt.

Mit der Bedingung nach Schritt S4 wird überprüft, ob das Fahrzeug über eine Holperstrecke fährt. Hierzu werden die $a_z$-werte mit einem Kurzzeitfilter (d. h. mit kleiner Zeitkonstante) gefiltert und der Betrag dieser gefilterten Werte mit einer Schwelle $S_m$ verglichen. Wird diese Schwelle überschritten, liegt eine Holperstrecke vor, so daß der Neigungssensor "falsche" werte liefern könnte.

Ferner wird in Schritt S5 überprüft, ob nicht die Änderungsgeschwindigkeit des $\alpha$-Wertes, die an einer Schwelle $S_{a\alpha}$ gemessen wird, zu hoch ist, da dann Kräfte auf das Fahrzeug wirken, die die Flüssigkeit des Neigungssensors zum Schwabbeln bringen, mit der Folge der Erzeugung von "falschen" Werten.

Schließlich wird noch überprüft, ob der $\alpha$-Wert mit dem von dem Beschleunigungssensor in z-Richtung gemessenen $a_z$-Wert konsistent ist, da der zuletzt genannte Wert dem $\cos \alpha$ ungefähr entsprechen muß.

Liegen alle in den Schritten S1 bis S6 genannten Bedingungen vor, wird der entsprechende $\alpha$-Wert als plausibel bewertet (Schritt S7). Wird dagegen eine dieser Bedingungen nicht erfüllt, wird der $\alpha$-Wert als nicht plausibel bewertet (Schritt S8).

Ein als plausibel bewerteter $\alpha$-Wert wird als aktueller Wert $\alpha_{akt}$ und als Startwinkel $\alpha_{start} = \alpha_{akt}$ gesetzt. Nach dem Durchlaufen des erweiterten Auslösealgorithmus definiert $\alpha_{start}$ den Startwinkel "alt" gemäß $\alpha_{start,alt} = \alpha_{start}$. Wird ein $\alpha$-Wert als nicht plausibel erkannt, ergibt sich der aktuelle Winkel $\alpha_{akt}$ gemäß $\alpha_{start,alt} + \Delta\alpha_{int}$ und der Startwinkel "neu" als $\alpha_{start} = \alpha_{akt}$. Vor Beginn einer neuen Routine wird wieder $\alpha_{start,alt} = \alpha_{start}$ gesetzt.

Falls der zuletzt als plausibel erkannte $\alpha$-Wert zu weit zeitlich zurückliegt, können entweder die erhöhten Auslöseschwellwerte $S_i(\alpha)$, i = 1,2,3 stufenweise wieder auf Grundwerte zurückgeführt, oder sofort auf diese Grundwerte gesetzt werden.

Nun zurück zu dem Ausführungsbeispiel gemäß Figur 10 bei dem zur Erkennung von Fahrsituationen, bei denen eine Auslösung unerwünscht ist, wie beispielsweise das Durchfahren einer Steilkurve, Komparatoren $K_5$, $K_6$ und $K_7$ und ein NAND-Gatters 10 vorgesehen sind. Den Komparatoren $K_5$, $K_6$ und $K_7$ sind jeweils eine einen Schwellwert $S_i$ erzeugende Schwellwertschaltung $SW_i$, mit i = 5, 6, 7 zugeordnet, wobei der von dem Drehratensensor 1 erzeugte $\omega_x$-Wert zum Vergleich mit dem Schwellwert $S_5$ dem Komparator $K_5$, der von dem Beschleunigungssensor 4 in z-Richtung erzeugte $a_z$-Wert dem Komparator $K_6$ und der von dem Neigungssensor 5 erzeugte $\alpha$-Wert dem Komparator $K_7$ zugeführt wird. Werden die Schwellwerte S, (i=5, 6) von den jeweiligen Meßwerten überschritten und gleichzeitig der Schwellwert $S_7$ von dem $\alpha$-Wert unterschritten, steht am Ausgang des NAND-Gatters 10 ein logischer L-Wert, der das AND-Gatter 7 sperrt, so daß ein am anderen Eingang dieses AND-Gatters 7 anstehendes H-Signal nicht zu einer Auslösung über das OR-Gatter 8 des Zündmittels 3 einer Sicherheitseinrichtung führt.

Die Auslösung soll also verhindert werden, wenn das Fahrzeug in eine Steilkurve fährt, da ansonsten der dabei auftretende hohe $\omega_x$-Wert zu einer Auslösung der Sicherheitseinrichtung führen würde. Daher wird der Schwellwert $S_5$ so gelegt, daß der beim Fahren in die Steilkurve auftretende $\omega_x$-Wert überschritten wird. Ferner tritt in einer solchen Fahrsituation ein $a_z$-Wert auf, der deutlich über dem Wert von 1 g liegt, weshalb der entsprechende Schwellwert $S_6$ bei ca. 1 g eingestellt wird. Der $\alpha$-Wert wird beim Durchfahren der Steilkurve aufgrund der Fahrbahnüberhöhung - und der bei Verwendung eines Flüssigkeitsneigungssensors auftretenden Zentrifugalbeschleunigung - wenig von 0° abweichen, d. h. unter einem bestimmten Wert bleiben. Daher wird der $\alpha$-Wert dem invertierenden Eingang und der Schwellwert $S_7$ dem nicht-invertierenden Eingang des Komparators $K_7$ zugeführt.

Treten sehr langsame Überschläge auf, bei denen die Auslöseschwellwerte $S_i(\alpha)$ mit i=1, 2, 3 nicht überschritten werden, wird zur Auslösung der Sicherheitseinrichtung der dabei auftretende Betrag des $\alpha$-wert mit einem dem statischen Kippwinkel des Fahrzeuges entsprechenden, von einer Schwellwertschaltung $SW_4$ erzeugten Auslöseschwellwert $S_4$ mittels eines Komparators $K_4$ verglichen. Wird dabei dieser Auslöseschwellwert $S_4$ überschritten, erfolgt nur dann eine Auslösung, wenn der entsprechende $\alpha$-Wert durch die Plausibilitätseinheit 11 als plausibel bewertet wurde, so daß infolgedessen an beiden Eingängen des AND-Gatters 9 ein H-Signal anliegt und damit auch die Aktivierung der Zündendstufe 3 erfolgt.

Die in den Ausführungsbeispielen erläuterten Filterfunktionen werden softwaremäßig mittels Mikroprozessoren ausgeführt. Jedoch ist es auch möglich, diese Filterfunktionen hardwaremäßig mit aus geeigneten elektrischen Bauelementen aufgebauten Filterschaltungen zu realisieren.

**Patentansprüche**

1. Verfahren zur Erzeugung eines das Sensorsignal eines in einem Sicherheitssystem eines Kraftfahrzeuges vorgesehenen Drehratensensors verarbeitenden Auslösealgorithmus, mit dem eine Auslöseentscheidung zur Auslösung von wenigstens einer Sicherheitseinrichtung des Sicherheitssystems in Abhängigkeit des sensorsignals getroffen wird, wobei das Sensorsignal ein Maß für die Drehgeschwindigkeit ($\omega$) der bei einem drohenden Überschlag auftretenden Wankbewegung darstellt, und wobei dieses Verfahren **dadurch gekennzeichnet ist, dass** folgende Schritte durchgeführt werden:

   a) Erzeugung folgender theoretischer Überschlag-Kennlinie:

$$\alpha_{th}(\omega) = -\left(\alpha_{kipp}/\omega_{grenz}\right)\omega + \alpha_{kipp} \ , \ \omega \geq 0 \tag{1}$$

bei der $\omega$ der anfänglichen Drehgeschwindigkeit einer Wankbewegung des Fahrzeuges und $\alpha_{th}(\omega)$ dem Neigungswinkel des Fahrzeuges entspricht, die Konstanten $\alpha_{kipp}$ und $\omega_{grenz}$ fahrzeugabhängig bestimmt werden, die den statischen Kippwinkel des Fahrzeuges, bei dessen Überschreiten das Fahrzeug kippt, bzw. den Drehgeschwindigkeitsbereich, bei dem mit $\omega \geq \omega_{grenz}$ ein Überschlag des Fahrzeuges erfolgt, angeben und der Bereich $B_{th}$ der $(\omega,\alpha)$-Wertepaare mit $|\alpha| \geq \alpha_{th}(|\omega|)$ $(\alpha,\omega \ \varepsilon \ R)$ den zugehörigen überschlagsgefährdeten Bereich darstellt, bei dem eine positive Auslöseentscheidung erwartet wird, und

b) Erzeugung des Auslösealgorithmus durch Approximation der Überschlag-Kennlinie (1) im ersten Quadranten mit wenigstens zwei Tiefpassfilterfunktionen ($Y_{1,n}$, n=1,2,...; $Y_{2,n}$, n = 1,2,..) mit jeweils einer Auslöseschwelle ($S_1,S_2$), indem die Grenzfrequenzen ($f_{g1},f_{g1}$) der beiden Tiefpassfilterfunktionen ($Y_{1,n}$, n=1,2,...; $Y_{2,n}$, n=1,2,..) und die Auslöseschwellen ($S_1,S_2$) derart bestimmt sind, daß für den Bereich $B_{F1}$ der $(|\omega|, Y_{1,n}(\omega))$ - Wertepaare und den Bereich $B_{F2}$ der $(|\omega|, Y_{2,n}(\omega))$ - wertepaare mit

$$\left|Y_{1,n}(\omega)\right| > S_1 \ \text{ und } \ \left|Y_{2,n}(\omega)\right| > S_2, \qquad\qquad Y_{1,n}(\omega) \in R, \ Y_{2,n}(\omega) \in R \tag{2}$$

gilt:
$B_{F1} \subset B_{th}$ und $B_{F2} \subset B_{th}$.

2. Verfahren nach Anspruch 1, bei dem

a) zur Approximation der Überschlag-Kennlinie (1) mittels der ersten und zweiten Tiefpassfilterfunktionen ($Y_{1,n}$, n = 1,2,...; $Y_{2,n}$, n = 1,2,..) und den zugehörigen Auslöseschwellen ($S_1,S_2$) als Auslösealgorithmus die Ausgangsfolgen einer zeitabhängigen Sprungfunktion $\omega(t)$ bestimmt und die erhaltenen Kennlinien mit der Überschlag-Kennlinie (1) verglichen wird, und

b) gegebenenfalls die Grenzfrequenz ($f_{g1},f_{g1}$) der ersten und/oder zweiten Tiefpassfilterfunktion ($Y_{1,n}$, n=1,2,...; $Y_{2,n}$, n = 1,2,...) und/oder die Auslöseschwelle ($S_1,S_2$) der ersten und/oder zweiten Tiefpassfilterfunktion ($Y_{1,n}$, n = 1,2,...; $Y_{2,n}$, n =1,2,...) angepaßt werden.

3. Verfahren nach Anspruch 1 oder 2, bei dem

a) zur Approximation der Überschlag-Kennlinie (1) mittels der ersten und zweiten Tiefpassfilterfunktionen ($Y_{1,n}$, n=1,2,...; $Y_{2,n}$, n=1,2,..) und den zugehörigen Auslöseschwellen ($S_1,S_2$) als Auslösealgorithmus simulierte und/oder reale sensorsignaturen verarbeitet werden, und

b) in Abhängigkeit der mittels des Auslösealgorithmus getroffenen Auslöseentscheidungeh gegebenenfalls die Grenzfrequenz ($f_{g1}, f_{g2}$) der ersten und/oder zweiten Tiefpassfilterfunktion ($Y_{1,n}$, n = 1 ,2,...; $Y_{2,n}$, n =1,2,...) und/oder die Auslöseschwelle ($S_1, S_2$) der ersten und/oder zweiten Tiefpassfilterfunktion ($Y_{1,n}$, n=1,2,...; $Y_{2,n}$, n =1,2,...) angepaßt werden.

4. Verfahren nach Anspruch 1, bei dem der Auslösealgorithmus neben den Signalen des Drehratensensors Signale weiterer Sensoren verarbeitet, wobei die weiteren Sensoren die Stabilität anzeigende fahrzeugzustandsspezifische Parameter, insbesondere Vertikalbeschleunigung, Lateralbeschleunigung und Neigungswinkel erfassen und in Abhängigkeit dieser Parameter die Werte der Auslöseschwellen ($S_1,S_2$) angepaßt werden, indem

a) für jeden weiteren Sensor wenigstens eine Tiefpassfilterfunktion ($Y_{az,n}$, $Y_{ay,n}$, $Y_{\alpha,n}$, n =1,2,3,...) mit einer zugehörigen Grenzfrequenz ($f_{g,az}$, $f_{g,ay}$, $f_{g,\alpha}$) derart erzeugt wird,

a1) daß entsprechend dem von den Signalen der weiteren Sensoren angezeigten Grad der Stabilität des Fahrzeuges die Auslöseschwellen ($S_1, S_2$) herauf- oder herabsetzt werden,

b) der mit den Tiefpassfilterfunktionen ($Y_{az,n}$, $Y_{ay,n}$, $Y_{\alpha,n}$, n=1,2,3,...) erweiterte Auslösealgorithmus anhand der dem jeweiligen weiteren Sensor entsprechenden realen und/oder simulierten Sensorsignaturen simuliert und bewertet wird, indem

> b1) in Abhängigkeit der Bewertung der mittels des erweiterten Auslösealgorithmus getroffenen Auslöseentscheidung gegebenenfalls die Grenzfrequenz ($f_{g,az}$, $f_{g,ay}$, $f_{g,\alpha}$) und/oder die Schwellenanpassung gemäß Verfahrensschritt a1) angepaßt werden.

5. Verfahren nach einem der vorangehenden Ansprüche, bei dem die Tiefpassfilterfunktionen ($Y_{1,n}$, $Y_{2,n}$ $Y_{az,n}$, $Y_{ay,n}$, $Y_{\alpha,n}$, n =1,2,3,... ) als digitale Filter 1. Ordnung erzeugt werden.

6. Verfahren nach einem der vorangehenden Ansprüche , bei dem eine Hochpassfilterfunktion ($Y_{HP}$) erzeugt wird, vor einer Verarbeitung der simulierten und/oder realen Sensorsignaturen diese von der Hochpassfilterfunktion ($Y_{HP}$) verarbeitet werden.

7. Verfahren nach einem der vorangehenden Ansprüche, bei dem das Verfahren mittels einer programmierbaren Datenverarbeitungsanlage durchgeführt wird.

8. Sicherheitssystem für ein Kraftfahrzeug mit einem Drehratensensor (1), der die Drehgeschwindigkeit der Wankbewegung des Kraftfahrzeuges sensiert und mit wenigstens einer von einem Steuergerät gesteuerten Sicherheitseinrichtung, wobei in das Steuergerät ein nach einem der vorangehenden Ansprüche erzeugter Auslösealgorithmus implementiert ist, wobei für die zweite Tiefpassfilterfunktion $Y_{2,n}$ eine Grenzfrequenz ($f_{g2}$) mit $f_{g2} < f_{g1}$ und dessen Auslöseschwelle $S_2$, mit $S_2 < S_1$ festgelegt ist und die Sicherheitseinrichtung ausgelöst wird, falls eine Auslöseschwelle ($S_1$,$S_2$) von einem Ausgangswert $|Y_{1,n}(\omega)|$ oder $|Y_{2,n}(\omega)|$ der Tiefpassfilterfunktion überschritten wird.

9. Sicherheitssystem nach Anspruch 8, bei dem zur Erkennung eines langsamen Überschlages des Kraftfahrzeuges die Grenzfrequenz ($f_{g2}$) der zweiten Tiefpassfilterfunktion $Y_{2,n}$ einige wenige 1/10-Hz und eine hieran angepaßte Auslöseschwelle ($S_2$) aufweist.

10. Sicherheitssystem nach Anspruch 8, bei dem zur Erkennung eines Überschlages des Kraftfahrzeuges mit hoher anfänglicher Drehgeschwindigkeit die Grenzfrequenz ($f_{g1}$) der ersten Tiefpassfilterfunktion $Y_{1,n}$ einige Hz, vorzugsweise im Bereich von größer 5 bis 10 Hz, und eine hieran angepaßte hohe Auslöseschwelle ($S_1$) aufweist, und zur Erkennung eines Überschlages mit niedrigerer anfänglicher Drehgeschwindigkeit die Grenzfrequenz ($f_{g2}$) der zweiten Tiefpassfilterfunktion $f_{2,n}$ einige wenige Hz, vorzugsweise 1 bis 5 Hz und eine hieran angepaßte Auslöseschwelle ($S_2$) aufweist.

11. Sicherheitssystem nach Anspruch 10, bei dem zur Erkennung eines langsamen Überschlages des Kraftfahrzeuges mit dem Auslösealgorithmus eine dritte Tiefpassfilterfunktion $Y_{3,n}$ mit einer Grenzfrequenz ($f_{g3}$) mit einigen wenigen 1/10-Hz und eine hieran angepaßte Auslöseschwelle ($S_3$) realisiert wird.

12. Sicherheitssystem nach einem der Ansprüche 8 bis 11, bei dem mittels eines Beschleunigungssensors (4) die Vertikalbeschleunigung des Kraftfahrzeuges erfaßt wird, in das Steuergerät ein nach einem der Ansprüche 4 bis 7 erzeugter erweiterter Auslösealgorithmus implementiert wird, die von dem erweiterten Auslösealgorithmus verarbeiteten Signale des Beschleunigungssensors mit wenigstens einer Anpassungsschwelle ($S_{az}$) verglichen und bei Überschreitung bzw. Unterschreitung dieser Anpassungsschwelle ($S_{az}$) die Schwellwerte ($S_i$, i=1,2,3) der Auslöseschwellen hochgesetzt bzw. heruntergesetzt werden.

13. Sicherheitssystem nach einem der Ansprüche 8 bis 11, bei dem mittels eines Neigungssensors (5) die Neigung des Kraftfahrzeuges erfaßt wird, in das steuergerät ein nach einem der Ansprüche 4 bis 7 erzeugter erweiterter Auslösealgorithmus implementiert wird, die von dem erweiterten Auslösealgorithmus verarbeiteten Signale des Neigungssensors mit wenigstens einer Anpassungsschwelle ($S_{\alpha}$) verglichen und bei Überschreitung bzw. Unterschreitung dieser Anpassungsschwelle ($S_{\alpha}$) die Schwellwerte ($S_i$, i=1,2,3) der Auslöseschwellen hochgesetzt bzw. heruntergesetzt werden.

14. Sicherheitssystem nach einem der Ansprüche 8 bis 11, bei dem mittels Beschleunigungssensoren (4,6) die Vertikalbeschleunigung ($\alpha_z$) und die Lateralbeschleunigung ($\alpha_y$) des Kraftfahrzeuges erfaßt werden, in das Steuergerät ein nach einem der Ansprüche 4 bis 7 erzeugter erweiterter Auslösealgorithmus implementiert wird, die von dem erweiterten Auslösealgorithmus jeweils verarbeiteten Signale der Beschleunigungssensoren der Quotient ($\alpha_y/\alpha_z$) gebildet, dessen wert mit einer Quotientenschwelle ($S_{quot}$) verglichen, und die Sicherheitseinrichtung ausgelöst wird, falls die Quotientenschwelle ($S_{quot}$) von dem Quotienten ($\alpha_y/\alpha_z$) entsprechend der Vorzeichendefinition der Signale über- oder unterschritten wird.

**15.** Sicherheitssystem nach einem der Ansprüche 8 bis 11, bei dem mittels eines Beschleunigungssensors (7) und eines Neigungssensors (8) die Vertikalbeschleunigung ($\alpha_z$) und der Neigungswinkel ($\alpha$) des Kraftfahrzeuges erfaßt werden, in das Steuergerät ein nach einem der Ansprüche 4 bis 7 erzeugter erweiterter Auslösealgorithmus implementiert wird, und bei dem zwecks Berücksichtigung des den Signalen des Beschleunigungssensors und des Neigungssensors entsprechenden Fahrzeugzustandes in Abhängigkeit der von dem erweiterten Auslösealgorithmus jeweils verarbeiteten Signale des Beschleunigungssensors und des Neigungssensors die Werte ($S_i(\alpha,\alpha_z)$, i = 1,2,3) der Auslöseschwellen an den aktuellen Fahrzeugzustand angepaßt werden.

**16.** Sicherheitssystem nach Anspruch 15, bei dem in Abhängigkeit der von dem erweiterten Auslösealgorithmus verarbeiteten Signale des Beschleunigungsaufnehmers (7) und des Drehratensensors (1) ein Kippschwellwert ($S_4(\omega, \alpha_z)$) bestimmt wird, und die Sicherheitseinrichtung ausgelöst wird, falls das von dem erweiterten Auslösealgorithmus verarbeitete Signal des Neigungssensors diesen Kippschwellwert ($S_4(\omega,\alpha_z)$) überschreitet.

**17.** Sicherheitssystem nach einem der Ansprüche 8 bis 11, bei dem mittels eines Beschleunigungssensors (4) und eines Neigungssensors (5) die Vertikalbeschleunigung ($\alpha_z$) und der Neigungswinkel ($\alpha$) des Kraftfahrzeuges erfaßt werden, in das Steuergerät ein nach einem der Ansprüche 4 bis 7 erzeugter erweiterter Auslösealgorithmus implementiert wird, und anhand des die Vertikalbeschleunigung ($\alpha_z$) und die Drehgeschwindigkeit ($\omega$) charakterisierenden Fahrzeugzustandes die Plausibilität des Wertes ($\alpha$) des Neigungswinkels bewertet wird und bei Plausibilität dieser wert als aktueller Wert ($\alpha_{akt}$) des Neigungswinkels gesetzt wird.

**18.** Sicherheitssystem nach Anspruch 17, bei dem der gesetzte aktuelle wert ($\alpha_{akt}$) des Neigungswinkels mit einem dem Kippwinkel ($\alpha_{kipp}$) des Kraftfahrzeuges entsprechenden Kippschwellwert ($S_{kipp}$) verglichen wird, und die Sicherheitseinrichtung ausgelöst wird, falls der Kippschwellwert ($S_{kipp}$) von dem Betrag des aktuellen Wert ($\alpha_{akt}$) des Neigungswinkels unterschritten wird.

**19.** Sicherheitssystem nach Anspruch 17 oder 18, bei dem, falls ein nicht plausibler Wert ($\alpha$) des Neigungswinkels vorliegt, die während des Fahrbetriebes des Kraftfahrzeuges erfolgte Änderung ($\Delta\alpha_{int}$) des Neigungswinkels mittels einer Integration der Drehgeschwindigkeit ($\omega$) bestimmt und mit einem Startwinkel ($\alpha_{start}$) addiert und die Summe als aktueller Neigungswinkels ($\alpha_{akt}$) gesetzt wird.

**20.** Sicherheitssystem nach einem der Ansprüche 17 bis 18, bei dem in Abhängigkeit des gesetzten aktuellen Wertes ($\alpha_{akt}$) des Neigungswinkels die Werte (S_i($\alpha$), i = 1,2,3) der Auslöseschwellen an den aktuellen Fahrzeugzustand angepaßt werden.

**Claims**

**1.** Method for generating a tripping algorithm, said algorithm processing the sensor signal of a rotation rate sensor provided in a safety system of a motor vehicle, by means of which algorithm a tripping decision is made for tripping at least one safety device of the safety system depending on the sensor signal, wherein the sensor signal represents a measure of the rotational speed ($\omega$) of the rolling motion that occurs in the event of an imminent overturn and wherein this method is **characterized in that** the following steps are carried out:

a) generation of the following theoretical overturn characteristic:

$$\alpha_{th}(\omega) = -(\alpha_{kipp}/\omega_{grenz})\omega + \alpha_{kipp}, \; \omega \geq 0 \qquad (1)$$

in which $\omega$ corresponds to the initial rotational speed of a rolling motion of the vehicle and $\alpha_{th}(\omega)$ corresponds to the angle of inclination of the vehicle, constants $\alpha_{kipp}$ and $\omega_{grenz}$ are determined depending on the particular vehicle and respectively determine the static overturn angle of the vehicle, the exceeding of which angle results in vehicle overturn, and the rotational speed range in which the vehicle overturns at $\omega \geq \omega_{grenz}$, and the range $B_{th}$ of the pairs of variates ($\omega,\alpha$) represents the associated range of danger of overturn at $|\alpha| \geq \alpha_{th}(|\omega|)$ ($\alpha,\omega \; \varepsilon \; R$) where a positive tripping decision is expected, and

b) generation of the tripping algorithm by approximating the overturn characteristic (1) in the first quadrant with at least two low-pass filter functions ($Y_{1,n}$, n = 1,2,...; $Y_{2,n}$, n = 1,2,...) with one tripping limit ($S_1$,$S_2$) each, wherein the limit frequencies ($f_{g1}$,$f_{g1}$) of the two low-pass filter functions ($Y_{1,n}$, n = 1,2,...; $Y_{2,n}$, n = 1,2,...) and the tripping limits ($S_1$,$S_2$) are determined such that $B_{F1} \subset B_{th}$ and $B_{F2} \subset B_{th}$ is true for the range $B_{F1}$ of the pairs of variates ($|\omega|$,$Y_{1,n}(\omega)$) and the range $B_{F2}$ of the pairs of variates ($|\omega|$,$Y_{2,n}(\omega)$) with

$$|Y_{1,n}(\omega)| > S_1 \text{ and } |Y_{2,n}(\omega)| > S_2, \qquad Y_{1,n}(\omega) \in R, Y_{2,n}(\omega) \in R \qquad (2)$$

**2.** Method according to claim 1, in which

a) for approximating the overturn characteristic (1) by means of the first and second low-pass filter functions ($Y_{1,n}$, n = 1,2,...; $Y_{2,n}$, n = 1,2,...) and the associated tripping limits ($S_1$,$S_2$) as a tripping algorithm, the output sequences of a time-dependent saltus function $\omega(t)$ are determined and the obtained characteristics are compared with the overturn characteristic (1), and
b) the limit frequency ($f_{g1}$,$f_{g1}$) of the first and/or second low-pass filter function ($Y_{1,n}$, n = 1,2,...; $Y_{2,n}$, n = 1,2,...) and/or the tripping limit ($S_1$,$S_2$) of the first and/or second low-pass filter function ($Y_{1,n}$, n = 1,2,...; $Y_{2,n}$, n = 1,2,...) are adapted, if necessary.

**3.** Method according to claim 1 or 2, in which

a) for approximating the overturn characteristic (1) by means of the first and second low-pass filter functions ($Y_{1,n}$, n = 1,2,...; $Y_{2,n}$, n = 1,2,...) and the associated tripping limits ($S_1$,$S_2$) as a tripping algorithm, simulated and/or real sensor signatures are processed, and
b) the limit frequency ($f_{g1}$,$f_{g2}$) of the first and/or second low-pass filter function ($Y_{1,n}$, n = 1,2,...; $Y_{2,n}$, n = 1,2,...) and/or the tripping limit ($S_1$,$S_2$) of the first and/or second low-pass filter function ($Y_{1,n}$, n = 1,2,...; $Y_{2,n}$, n = 1,2,...) are adapted depending on the tripping decisions made by means of the tripping algorithm, if necessary.

**4.** Method according to claim 1, in which the tripping algorithm processes signals of further sensors in addition to the signals of the rotation rate sensor, wherein the further sensors detect vehicle-condition-specific parameters, in particular vertical acceleration, lateral acceleration and the angle of inclination, that indicate stability, and the values of the tripping limits ($S_1$,$S_2$) are adapted depending on these parameters in that

a) at least one low-pass filter function ($Y_{az,n}$, $Y_{ay,n}$, $Y_{\alpha,n}$, n = 1,2,3,...) with an associated limit frequency ($f_{g,az}$, $f_{g,ay}$, $f_{g,\alpha}$) is generated for each further sensor in such a manner

a1) that the tripping limits ($S_1$,$S_2$) are increased or reduced corresponding to the degree of vehicle stability indicated by the signals of the further sensors,

b) the tripping algorithm extended by the low-pass filter functions ($Y_{az,n}$, $Y_{ay,n}$, $Y_{\alpha,n}$, n = 1,2,3,...) is simulated and evaluated on the basis of the real and/or simulated sensor signatures that correspond to the respective further sensor in that

b1) if necessary, the limit frequency ($f_{g,az}$, $f_{g,ay}$, $f_{g,\alpha}$) and/or the threshold adaptation are adapted according to procedure step a1) depending on the evaluation of the tripping decision made by means of the extended tripping algorithm.

**5.** Method according to any one of the preceding claims, in which the low-pass filter functions ($Y_{1,n}$, $Y_{2,n}$, $Y_{az,n}$, $Y_{ay,n}$, $Y_{\alpha,n}$, n = 1,2,3,...) are generated as digital first-order filters.

**6.** Method according to any one of the preceding claims, in which a high-pass filter function ($Y_{HP}$) is generated, wherein the simulated and/or real sensor signatures, prior to being processed, are processed by the high-pass filter function ($Y_{HP}$).

**7.** Method according to any one of the preceding claims, in which the method is carried out by means of programmable data processing equipment.

8. Safety system for a motor vehicle with a rotation rate sensor (1) that senses the rotational speed of the rolling motion of the motor vehicle and with at least one safety device that is controlled by a control device, wherein a tripping algorithm generated according to any one of the preceding claims is implemented in the control device, wherein a limit frequency ($f_{g2}$) with $f_{g2} < f_{g1}$ is fixed for the second low-pass filter function $Y_{2,n}$ and its tripping limit $S_2$ is fixed at $S_2 < S_1$ and the safety device is tripped if a tripping limit ($S_1, S_2$) is exceeded by an initial value $|Y_{1,n}(\omega)|$ or $|Y_{2,n}(\omega)|$ of the low-pass filter function.

9. Safety system according to claim 8, in which, for recognizing a slow overturn of the motor vehicle, the limit frequency ($f_{g2}$) of the second low-pass filter function $Y_{2,n}$ comprises a few tenths of a hertz and a tripping limit ($S_2$) adapted thereto.

10. Safety system according to claim 8, in which, for recognizing an overturn of the motor vehicle at a high initial rotational speed, the limit frequency ($f_{g1}$) of the first low-pass filter function $Y_{1,n}$ comprises a few Hz, preferably ranging from more than 5 Hz to 10 Hz, and a high tripping limit ($S_1$) adapted thereto, and for recognizing an overturn at a lower initial rotational speed, the limit frequency ($f_{g2}$) of the second low-pass filter function $Y_{2,n}$ comprises a few Hz, preferably 1 Hz to 5 Hz, and a tripping limit ($S_2$) adapted thereto.

11. Safety system according to claim 10, in which, for recognizing a slow overturn of the motor vehicle with the tripping algorithm, there is provided a third low-pass filter function $Y_{3,n}$ with a limit frequency ($f_{g3}$) with a few tenths of a hertz and a tripping limit ($S_3$) adapted thereto.

12. Safety system according to any one of claims 8 to 11, in which the vertical acceleration of the motor vehicle is detected by means of an acceleration sensor (4), an extended tripping algorithm generated according to any one of claims 4 to 7 is implemented in the control device, the signals of the acceleration sensor processed by the extended tripping algorithm are compared with at least one adaptation threshold ($S_{az}$), and the threshold values (S;, i = 1,2,3) of the tripping limits are increased or reduced if this adaptation threshold ($S_{az}$) is exceeded or fallen short of.

13. Safety system according to any one of claims 8 to 11, in which the inclination of the motor vehicle is detected by means of an inclination sensor (5), an extended tripping algorithm generated according to any one of claims 4 to 7 is implemented in the control device, the signals of the inclination sensor processed by the extended tripping algorithm are compared with at least one adaptation threshold ($S_a$), and the threshold values (S;, i = 1,2,3) of the tripping limits are increased or reduced if this adaptation threshold ($S_a$) is exceeded or fallen short of.

14. Safety system according to any one of claims 8 to 11, in which the vertical acceleration ($a_z$) and the lateral acceleration ($a_y$) of the motor vehicle are detected by means of acceleration sensors (4,6), an extended tripping algorithm generated according to any one of claims 4 to 7 is implemented in the control device, the quotient ($a_y/a_z$) is formed from the signals of the acceleration sensors that are respectively processed by the extended tripping algorithm, the value of said quotient is compared with a quotient threshold ($S_{quot}$), and the safety device is tripped if the quotient threshold ($S_{quot}$) is exceeded or fallen short of by the quotient ($a_y/a_z$) corresponding to the sign definition of the signals.

15. Safety system according to any one of claims 8 to 11, in which the vertical acceleration ($a_z$) and the angle of inclination ($\alpha$) of the motor vehicle are detected by means of an acceleration sensor (7) and an inclination sensor (8), an extended tripping algorithm generated according to any one of claims 4 to 7 is implemented in the control device, and in which, for considering the vehicle condition that corresponds to the signals of the acceleration sensor and the inclination sensor, the values ($S_i(\alpha,a_z)$, i = 1,2,3) of the tripping limits are adapted to the current vehicle condition depending on the signals of the acceleration sensor and the inclination sensor that are respectively processed by the extended tripping algorithm.

16. Safety system according to claim 15, in which an overturn threshold value ($S_4(\omega,a_z)$) is determined depending on the signals of the acceleration sensor (7) and the rotation rate sensor (1) that are processed by the extended tripping algorithm, and the safety device is tripped if the signal of the inclination sensor processed by the extended tripping algorithm exceeds this overturn threshold value ($S_4(\omega,a_z)$).

17. Safety system according to any one of claims 8 to 11, in which the vertical acceleration ($a_z$) and the angle of inclination ($\alpha$) of the motor vehicle are detected by means of an acceleration sensor (4) and an inclination sensor (5), an extended tripping algorithm generated according to any one of claims 4 to 7 is implemented in the control device, and the plausibility of the value ($\alpha$) of the angle of inclination is evaluated on the basis of the vehicle condition that characterizes vertical acceleration ($a_z$) and rotational speed ($\omega$), and this value, if it is plausible, is set as the current

value ($\alpha_{akt}$) of the angle of inclination.

18. Safety system according to claim 17, in which the set current value ($\alpha_{akt}$) of the angle of inclination is compared with an overturn threshold value ($S_{kipp}$) that corresponds to the overturn angle ($\alpha_{kipp}$) of the motor vehicle, and the safety device is tripped if the amount of the current value ($\alpha_{akt}$) of the angle of inclination falls short of the overturn threshold value ($S_{kipp}$).

19. Safety system according to claim 17 or 18, in which, if the value ($\alpha$) of the angle of inclination is not plausible, the change ($\Delta\alpha_{int}$) of the angle of inclination that has taken place during the travelling motion of the motor vehicle is determined by means of an integration of the rotational speed ($\omega$) and added to a starting angle ($\alpha_{start}$) and the sum is set as the current angle of inclination ($\alpha_{akt}$).

20. Safety system according to any one of claims 17 to 18, in which the values ($S_i$ ($\alpha$), i = 1,2,3) of the tripping limits are adapted to the current vehicle condition depending on the set current value ($\alpha_{akt}$) of the angle of inclination.

**Revendications**

1. Procédé pour la production d'un algorithme de déclenchement traitant le signal de capteur d'un capteur de taux de rotation prévu dans le système de sécurité d'un véhicule à moteur, avec lequel une décision de déclenchement pour le déclenchement d'au moins un équipement de sécurité du système de sécurité est prise, en fonction du signal de capteur, le signal de capteur représentant une mesure pour la vitesse de rotation ($\omega$) du mouvement de roulis se manifestant lorsque le véhicule menace de se retourner et ce procédé étant **caractérisé par le fait que** les étapes suivantes sont exécutées :

a) Production de la courbe caractéristique de retournement théorique suivante :

$$\alpha_{th}(\omega) = -(\alpha_{kipp}/\omega_{grenz})\omega + \alpha_{kipp}.\omega \geq 0 \qquad (1)$$

pour laquelle $\omega$ correspond à la vitesse de rotation initiale d'un mouvement de roulis du véhicule et $\alpha_{th}(\omega)$ correspond à l'angle d'inclinaison du véhicule, les constantes $\alpha_{kipp}$ et $\omega_{grenz}$ sont déterminées en fonction du véhicule, qui indiquent l'angle de basculement statique du véhicule pour le dépassement duquel le véhicule bascule, ou encore la zone de vitesse de rotation pour laquelle un retournement se produit avec $\omega \geq \omega_{grenz}$ et la zone $B_{th}$ de la paire de valeurs ($\omega,\alpha$) représente la zone à risque de retournement correspondante avec $|\alpha| \geq \alpha_{th}(|\omega|)$ ($\alpha,\omega \in$ R), pour laquelle une décision positive de déclenchement est attendue, et

b) Production de l'algorithme de déclenchement par approximation de la courbe caractéristique de retournement (1) dans le premier quadrant, avec au moins deux fonctions de filtre passe-bas ($Y_{1,n}$, n=1,2,... ; $Y_{2,n}$ n=1,2,...) avec respectivement un seuil de déclenchement ($S_1$, $S_2$), les fréquences limite ($f_{g1}$, $f_{g1}$) des deux fonctions de filtre passe-bas ($Y_{1,n}$, n=1,2,... ; $Y_{2,n}$ n=1,2,...) et les seuils de déclenchement ($S_1$, $S_2$) étant déterminés de sorte que, pour la zone $B_{F1}$ de la paire de valeurs ($|\omega|_1 Y_{1,n}(\omega)$) et pour la zone $B_{F2}$ de la paire de valeurs ($|\omega|_2 Y_{2,n}(\omega)$) avec

$$|Y_{1,n}(\omega)| > S_1 \text{ et } |Y_{2,n}(\omega)| > S_2, \qquad Y_{1,n}(\omega) \in R, Y_{2,n}(\omega) \in R \ (2)$$

vaut:

$$B_{F1} \subset B_{th} \text{ et } B_{F2} \subset B_{th}$$

2. Procédé selon la revendication 1, pour lequel

a) pour l'approximation de la courbe caractéristique de retournement (1) au moyen des première et deuxième fonctions de filtre passe-bas ($Y_{1,n}$, n=1,2,... ; $Y_{2,n}$ n=1,2,...) et les seuils de déclenchement ($S_1$, $S_2$) correspondants, les séquences de sortie d'une fonction échelon $\omega(t)$ en fonction du temps sont déterminées comme algorithme de déclenchement et les courbes caractéristiques obtenues sont comparées avec la courbe caractéristique de retournement (1), et

b) le cas échéant, la fréquence limite ($f_{g1}$, $f_{g1}$) de la première et/ou de la deuxième fonction de filtre passe-bas ($Y_{1,n}$, n=1,2,... ; $Y_{2,n}$ n=1,2,...) et/ou le seuil de déclenchement ($S_1$, $S_2$) de la première et/ou de la deuxième fonction de filtre passe-bas ($Y_{1,n}$, n=1,2,... ; $Y_{2,n}$ n=1,2,...) sont ajustés.

3. Procédé selon la revendication 1 ou 2, pour lequel

a) pour l'approximation de la courbe caractéristique de retournement (1) au moyen des première et deuxième fonctions de filtre passe-bas ($Y_{1,n}$, n=1,2,... ; $Y_{2,n}$ n=1,2,...) et les seuils de déclenchement ($S_1$, $S_2$) correspondants, des signatures de capteur réelles et/ou simulées sont traitées, et

b) en fonction des décisions de déclenchement prises au moyen de l'algorithme de déclenchement, la fréquence limite ($f_{g1}$, $f_{g1}$) de la première et/ou de la deuxième fonction de filtre passe-bas ($Y_{1,n}$, n=1,2,... ; $Y_{2,n}$ n=1,2,...) et/ou le seuil de déclenchement ($S_1$, $S_2$) de la première et/ou de la deuxième fonction de filtre passe-bas ($Y_{1,n}$, n=1,2,... ; $Y_{2,n}$ n=1,2,...) sont ajustés, le cas échéant.

4. Procédé selon la revendication 1, pour lequel l'algorithme de déclenchement traitent d'autres signaux d'autres capteurs, en plus des signaux du capteur de taux de rotation, les autres capteurs enregistrant des paramètres indiquant la stabilité spécifiques à l'état du véhicule, en particulier l'accélération verticale, l'accélération latérale et l'angle d'inclinaison, et les valeurs des seuils de déclenchement ($S_1$, $S_2$) étant ajustées en fonction de ces paramètres,

a) en produisant, pour chaque capteur supplémentaire, au moins une fonction de filtre passe-bas ($Y_{az,n}$, $Y_{ay,n}$, $Y_{\alpha,n}$, n=1,2,3...) avec une fréquence limite ($f_{g,az}$, $f_{g,ay}$, $f_{g,\alpha}$) de sorte que

a1) les seuils de déclenchement ($S_1$, $S_2$) sont montés ou baissés, de façon correspondante au degré de stabilité du véhicule indiqué par les signaux des autres capteurs,

b) l'algorithme de déclenchement élargi avec les fonctions de filtre passe-bas ($Y_{az,n}$, $Y_{ay,n}$, $Y_{\alpha,n}$, n=1,2,3...) est simulé et évalué au moyen des signatures de capteur simulées et/ou réelles correspondant respectivement aux autres capteurs,

b1) en ajustant la fréquence limite ($f_{g,az}$, $f_{g,ay}$, $f_{g,\alpha}$) et/ou l'ajustement de seuil conformément à l'étape de procédé a1) en fonction de l'évaluation de la décision de déclenchement prise au moyen de l'algorithme de déclenchement élargi.

5. Procédé selon l'une des revendications précédentes, pour lequel les fonctions de filtre passe-bas ($Y_{1,n}$, $Y_{2,n}$, $Y_{az,n}$, $Y_{ay,n}$, $Y_{\alpha,n}$, n=1,2,3...) sont produites comme filtres numériques de premier ordre.

6. Procédé selon l'une des revendications précédentes, pour lequel une fonction de filtre passe-haut ($Y_{HP}$) est produite, les signatures de capteur simulées et/ou réelles étant traitées par la fonction de filtre passe-haut ($Y_{HP}$) avant leur traitement.

7. Procédé selon l'une des revendications précédentes, pour lequel le procédé est exécuté au moyen d'une installation de traitement des données programmable.

8. Système de sécurité pour un véhicule à moteur avec un capteur de taux de rotation (1), qui enregistre la vitesse de rotation du mouvement de roulis du véhicule à moteur et avec au moins un équipement de sécurité contrôlé par un dispositif de commande, un algorithme de déclenchement produit selon l'une des revendications précédentes étant implémenté dans le dispositif de commande, une fréquence limite ($f_{g2}$) avec $f_{g3} < f_{g4}$ et son seuil de déclenchement $S_2$ avec $S_2 < S_1$ étant définis pour la deuxième fonction de filtre passe-bas $Y_{2,n}$, et l'équipement de sécurité étant déclenché au cas où un seuil de déclenchement ($S_1$, $S_2$) est dépassé par une valeur de sortie $|Y_{1,n}(\omega)|$ ou $|Y_{2,n}(\omega)|$ de la fonction de filtre passe-bas.

9. Système de sécurité selon la revendication 8, pour lequel la fréquence limite ($f_{g2}$) de la deuxième fonction de filtre passe-bas $Y_{2,n}$ présente seulement quelques 1/10 de Hz et un seuil de déclenchement ($S_2$) y étant ajusté, pour la reconnaissance d'un retournement lent du véhicule à moteur.

**10.** Système de sécurité selon la revendication 8, pour lequel, pour la reconnaissance d'un retournement du véhicule à moteur avec vitesse de rotation initiale élevée, la fréquence limite ($f_{g1}$) de la première fonction de filtre passe-bas $Y_{1,n}$ présente quelques Hz, de préférence dans la zone supérieure à 5 Hz, jusqu'à 10 Hz, et un seuil de déclenchement (SI) élevé y étant ajusté, et, pour la reconnaissance d'un retournement du véhicule à moteur avec vitesse de rotation initiale faible, la fréquence limite ($f_{g2}$) de la deuxième fonction de filtre passe-bas $Y_{2,n}$ présente seulement quelques Hz, de préférence de 1 Hz à 5 Hz, et un seuil de déclenchement ($S_2$) y étant ajusté.

**11.** Système de sécurité selon la revendication 10, pour lequel, pour la reconnaissance d'un retournement lent du véhicule à moteur avec l'algorithme de déclenchement, une troisième fonction de filtre passe-bas $Y_{3,n}$ est réalisée, avec une fréquence limite ($f_{g3}$) avec seulement quelques 1/10 de Hz et un seuil de déclenchement ($S_3$) y étant ajusté.

**12.** Système de sécurité selon l'une des revendications 8 à 11, pour lequel l'accélération verticale du véhicule à moteur est enregistrée au moyen d'un capteur d'accélération (4), un algorithme de déclenchement élargi produit selon l'une des revendications 4 à 7 est implémenté dans le dispositif de commande, les signaux du capteur d'accélération traités par l'algorithme de déclenchement élargi sont comparés avec au moins un seuil de déclenchement ($S_{az}$) et les valeurs de seuil ($S_i$, i=1,2,3) des seuils de déclenchement sont augmentées ou bien diminuées lors du dépassement supérieur ou inférieur de ce seuil d'ajustement ($S_{az}$).

**13.** Système de sécurité selon l'une des revendications 8 à 11, pour lequel l'inclinaison du véhicule à moteur est enregistrée au moyen d'un capteur d'inclinaison (5), un algorithme de déclenchement élargi produit selon l'une des revendications 4 à 7 est implémenté dans le dispositif de commande, les signaux du capteur d'inclinaison traités par l'algorithme de déclenchement élargi sont comparés avec au moins un seuil de déclenchement ($S_\alpha$) et les valeurs de seuil ($S_i$, i=1,2,3) des seuils de déclenchement sont augmentées ou bien diminuées lors du dépassement supérieur ou inférieur de ce seuil d'ajustement ($S_\alpha$).

**14.** Système de sécurité selon l'une des revendications 8 à 11, pour lequel l'accélération verticale ($a_z$) et l'accélération latérale ($a_y$) du véhicule à moteur sont enregistrées au moyen de capteurs d'accélération (4, 6), un algorithme de déclenchement élargi produit selon l'une des revendications 4 à 7 est implémenté dans le dispositif de commande, les signaux des capteurs d'accélération respectivement traités par l'algorithme de déclenchement élargi forment le quotient ($a_y/a_z$) dont la valeur est comparée avec le seuil de quotient ($S_{quot}$), et l'équipement de sécurité est déclenché au cas où le seuil de quotient ($S_{quot}$) est dépassé de façon supérieure ou inférieure par le quotient ($a_y/a_z$) de façon correspondante à la définition de signe des signaux.

**15.** Système de sécurité selon l'une des revendications 8 à 11, pour lequel l'accélération verticale ($a_z$) et l'inclinaison ($\alpha$) du véhicule à moteur sont enregistrées au moyen d'un capteur d'accélération (7) et d'un capteur d'inclinaison (8), un algorithme de déclenchement élargi produit selon l'une des revendications 4 à 7 est implémenté dans le dispositif de commande, et pour lequel les valeurs ($S_i(\alpha,a_z)$, i=1,2,3) des seuils de déclenchement sont ajustées à l'état courant du véhicule dans le but de tenir compte de l'état du véhicule correspondant aux signaux du capteur d'accélération et du capteur d'inclinaison, en fonction des signaux du capteur d'accélération et du capteur d'inclinaison respectivement traités par l'algorithme de déclenchement élargi.

**16.** Système de sécurité selon la revendication 15, pour lequel une valeur de seuil de basculement ($S_4(\omega,a_z)$) est déterminé en fonction des signaux de l'enregistreur d'accélération (7) et du capteur de taux de rotation (1) traités par l'algorithme de déclenchement élargi, et l'équipement de sécurité est déclenché au cas où le signal du capteur d'inclinaison traité par l'algorithme de déclenchement dépasse cette valeur de seuil de basculement ($S_4(\omega,a_z)$).

**17.** Système de sécurité selon l'une des revendications 8 à 11, pour lequel l'accélération verticale ($a_z$) et l'inclinaison ($\alpha$) du véhicule à moteur sont enregistrées au moyen d'un capteur d'accélération (4) et d'un capteur d'inclinaison (5), un algorithme de déclenchement élargi produit selon l'une des revendications 4 à 7 est implémenté dans le dispositif de commande, et la plausibilité de la valeur ($\alpha$) est évaluée au moyen de l'état du véhicule caractérisant l'accélération verticale ($a_z$) et la vitesse de rotation ($\omega$) et, dans le cas où cette valeur est plausible, cette valeur est fixée comme valeur courante ($\alpha_{akt}$) de l'angle d'inclinaison.

**18.** Système de sécurité selon la revendication 17, pour lequel la valeur courante déterminée ($\alpha_{akt}$) de l'angle d'inclinaison est comparée avec une valeur de seuil de basculement ($S_{kipp}$) correspondant à l'angle de basculement ($\alpha_{kipp}$) du véhicule à moteur, et l'équipement de sécurité est déclenché au cas où la valeur de seuil de basculement ($S_{kipp}$)

est dépassée de façon inférieure par le montant de la valeur courante déterminée ($\alpha_{akt}$) de l'angle d'inclinaison.

**19.** Système de sécurité selon les revendications 17 ou 18, pour lequel, au cas où une valeur ($\alpha$) de l'angle d'inclinaison non plausible est donnée, la modification ($\Delta\alpha_{int}$) s'étant produite pendant le fonctionnement routier du véhicule à moteur est déterminée au moyen d'une intégration de la vitesse de rotation ($\omega$) et est ajoutée à un angle initial ($\alpha_{start}$) et la somme est fixée comme angle d'inclinaison ($\alpha_{akt}$) courant.

**20.** Système de sécurité selon l'une des revendication 17 à 18, pour lequel les valeurs ($S_i(\alpha)$, i=1,2,3) des seuils de déclenchement sont ajustées à l'état courant du véhicule, en fonction de la valeur courante déterminée ($\alpha_{akt}$) de l'angle d'inclinaison.

FIG.1

FIG. 2

FIG. 3

FIG.4

Auslösewinkel α/°

Drehrate $\omega_x$ /°/s

FIG.5

FIG.6

FIG.7

```
                    ( Start )————S1


┌─────────────────────────────────────┐
│ A/D Wandlung der  ωx —Werte          │
│ A/D Wandlung der  āz —Werte          │————S2
└─────────────────────────────────────┘

┌─────────────────────────────────────┐
│ Berechnung der Filterwerte für       │
│ TP1 ..... TP3 :  Yi,n( ωx )          │————S3
│     i = 1,2,3                        │
└─────────────────────────────────────┘

┌─────────────────────────────────────┐
│ Berechnung der Filterwerte für       │
│       TPaz :  Yaz( az )              │————S4
│ TPaz,stat :  Yaz,stat.,n( az )       │
└─────────────────────────────────────┘

┌─────────────────────────────────────┐
│ Bestimmung der Schwellen :           │
│   Si(az)= fi (Yaz( az ))             │————S5
│      i = 1,2,3                       │
└─────────────────────────────────────┘
```

$$|Y_{i,n}( \omega_x )| > S_i(a_z)$$
$$i = 1,2,3$$

S6

ja

nein

$$|Y_{az,stat.,n}( a_z )| < S_4$$

S7

ja

nein

S8

Auslösung

$$\left| y_{ay,n}(a_y) \middle/ y_{az,n}(a_z) \right|$$

FIG.8

FIG.9

FIG.10

$$\omega_x, a_z, \alpha$$

FIG.11

S1

$\omega_x$ bzw $\omega_{Fil\,i\,out}$
$i = 1,2,3$
$< S_\omega$ ?

nein

ja

$\left|\dfrac{d\omega}{dt}\right| < S_{d\omega}$ ?　　S2

nein

ja

$S_{nu} < a_{z\,Fil\,n} < S_{no}$ ?　　S3

nein

ja

$\left|a_{z\,Fil\,m}\right| < S_m$ ?　　S4

nein

ja

$\left|\dfrac{d\alpha}{dt}\right| < S_{d\alpha}$ ?　　S5

nein

ja

$a_z$ −Wert konsistent
mit $\alpha$ −Wert ?　　S6

nein

ja

$\alpha$ −Wert
nicht plausibel

$\alpha$ −Wert
plausibel

S8

S7